(19) Europäisches Patentamt / European Patent Office / Office européen des brevets

(11) **EP 2 084 116 B1**

(12) **FASCICULE DE BREVET EUROPEEN**

(45) Date de publication et mention de la délivrance du brevet:
**02.10.2019 Bulletin 2019/40**

(51) Int Cl.:
*C04B 35/01* (2006.01)    *C04B 35/626* (2006.01)
*C04B 35/653* (2006.01)    *C01G 45/12* (2006.01)
*H01M 4/90* (2006.01)    *H01M 4/86* (2006.01)
*H01M 8/124* (2016.01)

(21) Numéro de dépôt: **07858654.2**

(22) Date de dépôt: **24.10.2007**

(86) Numéro de dépôt international:
**PCT/FR2007/052235**

(87) Numéro de publication internationale:
**WO 2008/050063 (02.05.2008 Gazette 2008/18)**

(54) **PROCEDE DE FABRICATION D'UN PRODUIT DE PEROVSKITE DE LTM**

VERFAHREN ZUR HERSTELLUNG EINES LTM-PEROVSKIT-PRODUKTS

PROCESS FOR MANUFACTURING AN LTM PEROVSKITE PRODUCT

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **24.10.2006 FR 0654481**
**24.10.2006 FR 0654482**
**27.02.2007 FR 0753541**

(43) Date de publication de la demande:
**05.08.2009 Bulletin 2009/32**

(73) Titulaire: **Saint-Gobain Centre de Recherches et d'Etudes**
**Européen**
**92400 Courbevoie (FR)**

(72) Inventeurs:
• **MARLIN, Samuel**
**13750 Plan D'orgon (FR)**
• **LEVY, Caroline**
**34070 Montpellier (FR)**

(74) Mandataire: **Nony**
**11 rue Saint-Georges**
**75009 Paris (FR)**

(56) Documents cités:
EP-A2- 0 732 430    EP-A2- 0 732 430
US-A- 5 411 767

• LI, CHANG-JIU ET AL: "Effect of spray parameters on the electrical conductivity of plasma -sprayed La1-xSrxMnO3 coating for the cathode of SOFCs" SURFACE AND COATINGS TECHNOLOGY , 198(1-3), 278-282 CODEN: SCTEEJ; ISSN: 0257-8972, 2005, XP002437520
• MING Q ET AL: "A new route to synthesize La1-xSrxMnO3" JOURNAL OF MATERIALS SCIENCE KLUWER ACADEMIC PUBLISHERS USA, vol. 35, no. 14, 15 juillet 2000 (2000-07-15), pages 3599-3606, XP002437521 ISSN: 0022-2461
• BOUCHARD, D. ET AL: "Synthesis and characterization of La0.8Sr0.2MO3-.delta. (M = Mn, Fe, or Co) cathode materials by induction plasma technology" JOURNAL OF THERMAL SPRAY TECHNOLOGY , 15(1), 37-45 CODEN: JTTEE5; ISSN: 1059-9630, 2006, XP008079870
• SYSKAKIS E ET AL: "Structural and high temperature electrical properties of Lay-xSrxMnO3 perovskite materials" J PHY; JOURNAL DE PHYSIQUE NOV 1993 PUBL BY EDITIONS DE PHYSIQUE, LES ULIS, FR, vol. 3, no. 7 part 2, 8 juin 1993 (1993-06-08), pages 1429-1434, XP008079868
• SYSKAKIS, E. ET AL: "Properties of perovskite powders and ceramics for solid oxide fuel cell application" MATER. POWDER TECHNOL.--PTM'93, [PAP. INT. CONF.] , 707-12. EDITOR(S): ALDINGER, F. PUBLISHER: DGM INFORMATIONSGES, OBERURSEL, GERMANY. CODEN: 60ADAJ, 1993, XP008079838

- MICHALOPOULOU A ET AL: "Calorimetric and electrical transport properties of stoichiometric La 1-xSrxMnO3 compounds" J PHYS CONDENS MATTER; JOURNAL OF PHYSICS CONDENSED MATTER NOV 19 2003, vol. 15, no. 45, 19 novembre 2003 (2003-11-19), pages 7763-7776, XP002437676

**Description**

L'invention concerne un nouveau procédé de fabrication de pérovskite de lanthane - strontium - manganèse (LSM).

On appelle classiquement pérovskite tout élément présentant une structure de type $ABO_3$.

Un pérovskite de lanthane - strontium - manganèse (LSM) est un composé où A est du Lanthane dopé au Strontium et B du Manganèse. Sa structure est du type $(La_{(1-x)}Sr_x)_{(1-y)}M_nO_3$.

Les poudres de pérovskite de lanthane - strontium - manganèse actuellement disponibles sur le marché sont notamment utilisées pour la fabrication de cathodes de piles à combustible à oxyde solide (SOFC ou « *Solid Oxide Fuel Cell*» en anglais). Elles sont généralement fabriquées par les procédés suivants :

- co-précipitation / sol-gel
- synthèse par frittage en voie solide, par exemple comme décrit dans US 5,453,330
- synthèse à partir de précurseurs et pyrolyse.

Un procédé par évaporation-condensation est également décrit dans le document « Nanomaterials : new elaboration processes using solar furnaces », Materials Science Forum, Vols. 269-272 (1998), pp 297-302.

L'article "Influence of synthetis route on the catalytic properties of La1-xSrxMnO3 », Solid State Ionics 131 (2000) 211-220, par Robert J. Bell, Graeme J. Millar et John Drennan, décrit également six procédés pour synthétiser des poudres de pérovskite de lanthane - strontium - manganèse.

Toutes les poudres obtenues selon les procédés décrits ci-dessus présentent des tailles moyennes de grains assez faibles (submicroniques) à moyennes (de l'ordre de $5\mu$m). Elles sont d'un coût élevé.

On connaît également des procédés de fabrication de pérovskite de lanthane - strontium - manganèse monocristallin par un appareil de fusion à zone flottante, par exemple de EP 0 732 430. Ces procédés sont cependant coûteux.

L'article « *Effect of spray parameters on the electrical conductivity of plasma-sprayed $La_{1-x}Sr_xMnO_3$ coating for the cathode of SOFCs* » décrit un revêtement obtenu par projection plasma. Comme indiqué à la page 279, un tel revêtement présente une structure lamellaire que ne présente pas un produit fondu et coulé.

Il existe donc un besoin pour un nouveau procédé permettant de fabriquer à un coût réduit et en quantités industrielles du pérovskite de lanthane - strontium - manganèse.

Le but de l'invention est de satisfaire ce besoin.

On décrit un procédé de fabrication de pérovskite de lanthane - strontium - manganèse, ce procédé comportant les étapes suivantes :

a) mélange de matières premières pour former une charge de départ ;
b) fusion de la charge de départ jusqu'à obtention d'un liquide en fusion ;
c) solidification du liquide en fusion de manière à former un matériau solide,

les matières premières étant choisies de manière que le matériau solide obtenu à l'étape c), dit « matériau fondu », présente la composition chimique suivante, en pourcentages massiques et pour un total de 100% :

36% < Lanthane exprimé sous la forme $La_2O_3$ < 70,7%
0% < Strontium exprimé sous la forme SrO < 25,8%
29,3% < Manganèse exprimé sous la forme MnO < 41,2%
Impuretés < 0,7%.

Le matériau peut présenter la forme d'un bloc ou d'une particule.

Dans un premier mode de réalisation, on décrit ainsi un procédé de fabrication de particules comportant du pérovskite de lanthane - strontium - manganèse, ce procédé comportant les étapes suivantes :

$a_{1i}$ mélange de matières premières pour former une charge de départ ;
$b_1$) fusion de la charge de départ jusqu'à obtention d'un liquide en fusion ;
$c_1$) dispersion du liquide en fusion sous forme de gouttelettes liquides ;
$d_1$) solidification de ces gouttelettes liquides par contact avec un fluide oxygéné.

A l'étape $a_1$), les matières premières sont choisies de manière que les particules solides obtenues à l'étape $d_1$), dites « particules fondues », présentent la composition chimique suivante, en pourcentages massiques et pour un total de 100% :

36% < Lanthane exprimé sous la forme $La_2O_3$ < 70,7%
0% < Strontium exprimé sous la forme SrO < 25,8%
29,3% < Manganèse exprimé sous la forme MnO < 41,2%
Impuretés < 0,7%.

Dans un deuxième mode de réalisation, on décrit un procédé de fabrication d'un bloc comportant du pérovskite de lanthane - strontium - manganèse, ce procédé comportant les étapes successives suivantes :

$a_2$) mélange de matières premières pour former une charge de départ ;
$b_2$) fusion de la charge de départ jusqu'à obtention d'un liquide en fusion ;
$c_2$) coulage du liquide en fusion dans un moule ;
$d_2$) solidification par refroidissement du liquide coulé dans le moule jusqu'à obtention d'un bloc au moins en partie solidifié ;
$e_2$) démoulage du bloc.

A l'étape $a_2$), les matières premières sont choisies de manière que le bloc démoulé présente la composition chimique suivante, en pourcentages massiques et pour un total de 100% :

36% < Lanthane exprimé sous la forme $La_2O_3$ < 70,7%
0% < Strontium exprimé sous la forme SrO < 25,8%
29,3% < Manganèse exprimé sous la forme MnO < 41,2%
Impuretés < 0,7%.

Les étapes des procédés sont conventionnelles pour fabriquer des particules fondues ou des blocs fondus et l'homme du métier sait déterminer les matières premières de manière à obtenir, dans ces particules fondues ou ces blocs fondus, ladite composition chimique, cette composition étant identique à celle du pérovskite de lanthane - strontium - manganèse $(La_{1-x}Sr_x)_{1-y}MnO_3$ avec $0 < x \leq 0,5$ et $-0,05 \leq y \leq 0,24$. Cependant, c'est avec étonnement que les inventeurs ont découvert que ces étapes classiques conduisent à un taux élevé de phase pérovskite.

Par simple adaptation de la composition de la charge de départ, des procédés classiques , en particulier, dans le cas des particules, mettant en oeuvre un soufflage ou une atomisation, permettent ainsi de fabriquer à partir d'un liquide fondu des particules ou des blocs de différentes tailles présentant un taux de pérovskite de lanthane - strontium - manganèse, hors impuretés, supérieur à 50 %, de préférence supérieur à 70 %, de préférence supérieur à 90 %, de préférence encore supérieur à 99 %, de préférence toujours supérieur à 99,9%. (La définition du taux de pérovskite de - strontium - manganèse d'un produit est donnée ultérieurement dans cette description.) Cette découverte, particulièrement surprenante, va à l'encontre des préjugés techniques qui, jusqu'à aujourd'hui, conduisaient l'homme du métier à ne s'intéresser qu'aux procédés complexes et coûteux décrits ci-dessus.

De préférence, le procédé de fabrication des premier et deuxième modes de réalisation comporte encore une et de préférence plusieurs des caractéristiques optionnelles suivantes :

- La charge de départ est déterminée de manière que l'analyse chimique des particules ou du bloc fabriqués soit la suivante, en pourcentages massiques et pour un total de 100 %:

38,4% < Lanthane exprimé sous la forme $La_2O_3$ < 69,7%
0% < Strontium exprimé sous la forme SrO < 25,4%
30,3% < Manganèse exprimé sous la forme MnO < 37,2%
Impuretés < 0,7%.

Cette composition est identique à celle du pérovskite de lanthane - strontium - manganèse $(La_{1-x}Sr_x)_{1-y}MnO_3$ avec $0 < x \leq 0,5$ et $0 \leq y \leq 0,1$.

- La charge de départ est déterminée de manière que l'analyse chimique des particules ou du bloc fabriqués soit la suivante, en pourcentages massiques et pour un total de 100%:

47,9% < Lanthane exprimé sous la forme $La_2O_3$ < 69,7%
0% < Strontium exprimé sous la forme SrO < 17%
30,3% < Manganèse exprimé sous la forme MnO < 35,7%
Impuretés < 0,7%.

Cette composition est identique à celle du pérovskite de lanthane - strontium - manganèse $(La_{1-x}Sr_x)_{1-y}MnO_3$ avec $0 < x \leq 0,35$ et $0 \leq y \leq 0,1$.

- La charge de départ est déterminée de manière que l'analyse chimique des particules ou du bloc fabriqués soit la suivante, en pourcentages massiques et pour un total de 100%:

  47,9% < Lanthane exprimé sous la forme $La_2O_3$ < 61,6%
  6,7% < Strontium exprimé sous la forme $SrO$ < 17%
  31,5% < Manganèse exprimé sous la forme $MnO$ < 35,7%
  Impuretés < 0,7%.

Cette composition est identique à celle du pérovskite de lanthane - strontium - manganèse $(La_{1-x}Sr_x)_{1-y}MnO_3$ avec $0,15 < x \leq 0,35$ et $0 \leq y \leq 0,1$.

- La charge de départ est déterminée de manière que l'analyse chimique des particules ou du bloc fabriqués soit la suivante, en pourcentages massiques et pour un total de 100%:

  53,9% < Lanthane exprimé sous la forme $La_2O_3$ < 61,6%
  6,7% < Strontium exprimé sous la forme $SrO$ < 11,8%
  31,5% < Manganèse exprimé sous la forme $MnO$ < 34,7%
  Impuretés < 0,7%

Cette composition des particules est identique à celle du pérovskite de lanthane - strontium - manganèse $(La_{1-x}Sr_x)_{1-y}MnO_3$ avec $0,15 < x \leq 0,25$ et $0 \leq y \leq 0,1$.

- De préférence la teneur massique en « Lanthane exprimé sous la forme $La_2O_3$ » est supérieure à 38,4%, de préférence à 47,9 %, de préférence encore à 53,9% et/ou inférieure à 69,7 %, de préférence à 61,6%.
- De préférence, la teneur massique en « Strontium exprimé sous la forme $SrO$ » est supérieure à 0,8%, de préférence à 6,7% et/ou inférieure à 25,4%, de préférence à 17%, de préférence encore à 11,8%.
- De préférence, la teneur massique en « Manganèse exprimé sous la forme $MnO$ » est supérieure à 30,3%, de préférence à 31,5% et/ou inférieure à 37,2%, de préférence à 35,7%, de préférence encore 34,7%.

De préférence, le procédé de fabrication du premier mode de réalisation comporte encore une et de préférence plusieurs des caractéristiques optionnelles suivantes :

- A l'étape $b_1$), on utilise un four à arc.
- A l'étape $c_1$), on met en contact ledit liquide en fusion avec un fluide oxygéné, de préférence identique à celui mis en oeuvre à l'étape $d_1$).
- Les étapes de dispersion et de solidification sont simultanées.
- On maintient un contact entre les gouttelettes et un fluide oxygéné jusqu'à la solidification complète desdites gouttelettes.
- Le fluide oxygéné à l'étape $c_1$) et/ou à l'étape $d_1$), de préférence l'air, comporte au moins 20 %, voire au moins 25%, en volume d'oxygène.
- Après l'étape $d_1$), on recuit les particules fondues. De préférence, les particules sont recuites à une température comprise entre 1050 et 1400 °C, de préférence de 1150°C, pendant un temps de palier en température d'au moins 30 minutes, de préférence supérieur à 2 heures, de préférence d'environ 5 heures. De préférence encore, les particules sont recuites sous une atmosphère contenant au moins 20% en volume d'oxygène, de préférence sous l'air, de préférence à pression atmosphérique.

De préférence, le procédé de fabrication du deuxième mode de réalisation comporte encore une et de préférence plusieurs des caractéristiques optionnelles suivantes :

- A l'étape $b_2$), on utilise un four par induction.

- A l'étape $c_2$) et/ou à l'étape $d_2$) et/ou après l'étape $e_2$), on met en contact, directement ou indirectement, du liquide en fusion en cours de solidification avec un fluide oxygéné, de préférence avec un gaz oxygéné, par exemple avec de l'air. De préférence, on commence ledit contact immédiatement après démoulage du bloc. De préférence encore, on maintient ce contact jusqu'à la solidification complète du bloc.

- La vitesse de refroidissement pendant la solidification est toujours inférieure à 1000 K/s, de préférence inférieure à 100 K/s, de préférence inférieure à 50 K/s.

- On procède au démoulage de l'étape $e_2$) avant solidification complète du bloc.

- De préférence, on démoule le bloc le plus rapidement possible, de préférence dès qu'il présente une rigidité suffisante pour conserver sensiblement sa forme, et, de préférence encore, on commence alors immédiatement la mise en contact avec le fluide oxygéné.

- Après l'étape $e_2$), on recuit le bloc démoulé. De préférence, le bloc est recuit à une température comprise entre 1050°C et 1400°C, de préférence 1150°C, pendant un temps de palier en température, compté à partir du moment où la totalité du bloc a atteint la température de palier (en surface de bloc et en coeur de bloc) de préférence supérieur à 30 minutes, de préférence supérieur à 2 heures, de préférence d'environ 5 heures De préférence encore, le bloc est recuit sous une atmosphère contenant au moins 20% en volume d'oxygène, de préférence sous l'air, de préférence à pression atmosphérique.

- Le bloc démoulé, éventuellement recuit, est réduit en morceaux ou en poudre, par exemple par concassage et/ou broyage. De préférence, on procède alors à une sélection granulométrique en fonction de l'application visée.

On décrit également un produit fondu, sous la forme d'une particule fondue ou d'un bloc fondu, comportant un taux de pérovskite de lanthane - strontium - manganèse hors impuretés de plus de 50 %, de préférence de plus de 70%, de préférence encore de plus de 90 %, de préférence toujours, de plus de 99 %, ce produit présentant la composition chimique suivante, en pourcentages massiques et pour un total de 100%:

36% < Lanthane exprimé sous la forme $La_2O_3$ < 70,7%
0% < Strontium exprimé sous la forme SrO < 25,8%
29,3% < Manganèse exprimé sous la forme MnO < 41,2%
Impuretés < 0,7%.

De préférence, ce produit présente, hors impuretés, un taux dudit pérovskite de lanthane - strontium - manganèse, de formule $(La_{1-x}Sr_x)_{1-y}MnO_3$ avec $0 < x \le 0,5$ et $-0,05 \le y \le 0,24$, qui est supérieur à 99,9 %, les paramètres x et y de la formule étant les proportions atomiques de chaque élément.
De préférence, le produit comporte encore une, et de préférence plusieurs, des caractéristiques optionnelles suivantes :

- Le produit est obtenu, ou peut être obtenu, suivant un procédé décrit ci-dessus.

- Le produit présente une teneur massique en « Lanthane exprimé sous la forme

$La_2O_3$ » supérieure à 38,4%, de préférence à 47,9 %, de préférence encore à 53,9% et/ou inférieure à 69,7 %, de préférence à 61,6%.

- Le produit présente une teneur massique en « Strontium exprimé sous la forme SrO » supérieure à 0,8%, de préférence à 6,7% et/ou inférieure à 25,4%, de préférence à 17%, de préférence encore à 11,8%.

- Le produit présente une teneur massique en « Manganèse exprimé sous la forme MnO » supérieure à 30,3%, de préférence à 31,5% et/ou inférieure à 37,2%, de préférence à 35,7%, de préférence encore 34,7%.

- Le produit présente, hors impuretés, un taux de pérovskite de lanthane - strontium - manganèse de formule $(La_{1-x}Sr_x)_{1-y}MnO_3$ de plus de 99,9% avec de préférence $x > 0,02$, de préférence $0,15 < x$ et/ou $x < 0,35$, de préférence $x < 0,25$.

- Le produit présente, hors impuretés, plus de 99,9% de pérovskite de lanthane - strontium - manganèse et $0 \le y$, et/ou $y \le 0,1$.

Avantageusement, ces deux dernières préférences confèrent au produit coulé des propriétés de conductivité électrique élevée le rendant particulièrement adapté, après broyage éventuel, à la fabrication de cathodes pour piles à combustible à oxyde solide (SOFC).

Le produit peut présenter la forme d'un bloc d'une épaisseur supérieure à 1 mm, de préférence supérieure à 2 mm, de préférence supérieure à 5 cm, de préférence encore supérieure à 15 cm, l'épaisseur d'un bloc étant sa plus petite dimension. De préférence ce bloc présente une masse supérieure à 200g.

Le produit peut également se présenter sous la forme d'une particule qui peut présenter l'une ou plusieurs des caractéristiques optionnelles suivantes :

- La particule est obtenue, ou peut être obtenue, suivant un procédé tel que décrit ci-dessus.

- La particule présente une teneur massique en « Lanthane exprimé sous la forme $La_2O_3$ » supérieure à 38,4%, de préférence à 47,9 %, de préférence encore à 53,9% et/ou inférieure à 69,7 %, de préférence à 61,6%.

- La particule présente une teneur massique en « Strontium exprimé sous la forme SrO » supérieure à 0,8%, de préférence à 6,7% et/ou inférieure à 25,4%, de préférence à 17%, de préférence encore à 11,8%.

- La particule présente une teneur massique en « Manganèse exprimé sous la forme MnO » supérieure à 30,3%, de préférence à 31,5% et/ou inférieure à 37,2%, de préférence à 35,7%, de préférence encore 34,7%.

- La particule présente, hors impuretés, un taux de pérovskite de lanthane - strontium - manganèse de formule $(La_{1-x}Sr_x)_{1-y}MnO_3$ de plus de 99,9%, avec de préférence $x > 0,02$, de préférence $0,15 < x$ et/ou $x < 0,35$, de préférence $x < 0,25$.

- La particule présente, hors impuretés, plus de 99,9 % de pérovskite de lanthane - strontium - manganèse et $0 \leq y$, et/ou $y \leq 0,1$.

Avantageusement, ces deux dernières préférences confèrent aux particules des propriétés de conductivité électrique élevée les rendant particulièrement adaptées, après broyage éventuel, à la fabrication de cathodes pour piles à combustible à oxyde solide (SOFC).

Le produit peut également se présenter sous la forme d'une particule, de préférence d'une taille inférieure à 4 mm, par exemple inférieure à 3 mm. La sphéricité de la particule peut être supérieure à 0,5, de préférence à 0,6, la sphéricité étant définie comme le rapport entre sa plus petite dimension et sa plus grande dimension.

Le produit peut ne pas avoir subi de traitement thermique de recuisson après solidification ou refroidissement et/ou ne pas résulter d'un broyage.

On décrit enfin l'utilisation de particules ou, éventuellement après broyage, d'un bloc, résultant de la mise en oeuvre d'un procédé tel que décrit ci-dessus ou l'utilisation d'un produit fondu, notamment de particules fondues, tel que décrit ci-dessus dans la fabrication de cathodes pour piles à combustible à oxyde solide (SOFC).

On définit le taux de pérovskite de lanthane - strontium - manganèse hors impuretés, en % selon la formule (1) suivante :

$$T = 100^* \, (A_{LSM})/ \, (A_{LSM} + A_{30,4<2\theta<31,6}) \qquad (1)$$

où

o $A_{LSM}$ est l'aire mesurée sur un diagramme de diffraction X obtenu à partir d'un appareil du type diffractomètre D5000 de la société BRUKER pourvu d'un tube DX en cuivre, sans traitement de déconvolution, du doublet principal du pérovskite de lanthane - strontium - manganèse ;

o $A_{30,4<2\theta<31,6}$ est l'aire mesurée sur le même diagramme, sans traitement de déconvolution, pour les phases présentant un pic de diffraction dans le domaine d'angles compris entre $2\theta = 30,4°$ et $2\theta = 31,6°$. Entre autres, la phase $La_2MnO_4$ présente un pic de diffraction dans ce domaine d'angles.

De manière générale, on appelle « produit fondu » un produit solide, éventuellement recuit, obtenu par solidification complète d'une composition à l'état liquide. Le produit « démoulé » obtenu à la fin de l'étape $e_2$) peut encore comporter des zones non solidifiées et, immédiatement après démoulage, n'est donc alors pas considéré comme un produit fondu.

On appelle « particule fondue » une particule solide, éventuellement recuite, obtenue par solidification d'une composition à l'état liquide.

On appelle « taille » d'une particule la moyenne de sa plus grande dimension dM et de sa plus petite dimension dm : (dM+dm)/2.

L'épaisseur d'un bloc est sa plus petite dimension.

Par « impuretés », on entend les constituants inévitables, introduits nécessairement avec les matières premières ou résultant de réactions avec ces constituants.

Un procédé de fabrication de particules, selon le premier mode de réalisation, est à présent décrit dans le détail.

A l'étape $a_1$), la charge de départ est formée des oxydes indiqués ou de précurseurs de ceux-ci. L'ajustement des compositions peut se faire par addition d'oxydes purs ou de mélanges d'oxydes et/ou de précurseurs, notamment $La_2O_3$, $SrO$, $SrCO_3$, $MnO_2$, $MnO$ ou $Mn_3O_4$.

L'homme du métier ajuste la composition de la charge de départ de manière à obtenir, à l'issue de l'étape $d_1$), une particule telle que décrite ci-dessus. L'analyse chimique de la particule fondue est généralement sensiblement identique à celle de la charge de départ. Mais, le cas échéant, l'homme du métier sait comment adapter la composition de la charge de départ, par exemple pour tenir compte de la présence d'éléments volatils ou de la disparition de certains éléments lors de la fusion.

De préférence, aucun élément autre que $La_2O_3$, $SrO$, $SrCO_3$, $MnO_2$, $MnO$ et $Mn_3O_4$ et aucun de leurs précurseurs n'est introduit volontairement dans la charge de départ, les autres éléments présents étant des impuretés.

De préférence, la somme de $La_2O_3$, $SrO$, $SrCO_3$, $MnO_2$, $MnO$, $Mn_3O_4$ et de leurs précurseurs représente plus de 99% en poids de la charge de départ.

Un mélange intime des matières premières peut être effectué dans un mélangeur. Ce mélange est ensuite versé dans un four de fusion.

A l'étape $b_1$), la charge de départ est fondue, de préférence dans un four à arc électrique. L'électrofusion permet en effet la fabrication de grandes quantités de particules avec des rendements intéressants.

On peut par exemple utiliser un four à arc de type Héroult comportant deux électrodes et dont la cuve a un diamètre d'environ 0,8 m et pouvant contenir environ 180 kg de liquide en fusion. De préférence, la tension est comprise entre 140 et 180 Volts, la puissance de l'ordre de 240 kW et l'énergie est comprise entre 1150 à 2800 kWh/T.

Mais tous les fours connus sont envisageables, comme un four à induction, un four à plasma ou d'autres types de four Héroult, pourvu qu'ils permettent de faire fondre complètement la charge de départ. Sans que ce soit systématique, il est possible d'augmenter la qualité du brassage par barbotage d'un gaz oxydant (air ou oxygène par exemple) comme mentionné dans FR 1 208 577. La qualité de brassage du liquide en fusion peut en particulier être améliorée par barbotage d'un gaz contenant 35% en volume d'oxygène.

A l'étape $c_1$), un filet du liquide en fusion, à une température de préférence comprise entre 1600 et 1800 °C, est dispersé en petites gouttelettes liquides.

La dispersion peut résulter d'un soufflage à travers le filet de liquide en fusion. Mais tout autre procédé d'atomisation d'un liquide en fusion, connu de l'homme de l'art, est envisageable.

A l'étape $d_1$), les gouttelettes liquides sont transformées en particules solides par contact avec un fluide oxygéné, de préférence gazeux, de préférence encore avec de l'air et/ou de la vapeur d'eau. Le fluide oxygéné comporte de préférence au moins 20 %, voire au moins 25%, en volume d'oxygène.

De préférence, le procédé est adapté de manière que, sitôt formée, la gouttelette de liquide en fusion soit en contact avec le fluide oxygéné. De préférence encore, la dispersion (étape $c_1$)) et la solidification (étape $d_1$)) sont sensiblement simultanées, le liquide en fusion étant dispersé par un fluide oxygéné apte à refroidir et solidifier ce liquide.

De préférence, le contact avec le fluide oxygéné est maintenu au moins jusqu'à la solidification complète des particules.

De préférence, aucun autre moyen de solidification qu'un refroidissement par contact avec le fluide oxygéné n'est utilisé. Ainsi par exemple, de préférence, on ne met pas en oeuvre de procédé d'hyper trempe par projection des gouttelettes de liquide en fusion sur une paroi métallique refroidie.

La vitesse de refroidissement est fonction du diamètre des particules. Elle est d'environ de 1000 K/s pour des particules de taille de 0,3 mm.

A l'issue de l'étape $d_1$), on obtient des particules solides qui présentent une taille comprise entre 0,01 et 3 mm, en fonction des conditions de dispersion.

Avantageusement, de manière surprenante et inexpliquée, la mise en contact du liquide en fusion avec un fluide oxygéné permet d'obtenir en quantités industrielles et à un coût réduit un taux de pérovskite de lanthane - strontium - manganèse hors impuretés remarquable, atteignant plus de 90 %, et même plus de 99,9 %, sans étape de recuisson.

D'autres phases peuvent cependant être présentes, ainsi que des impuretés en provenance des matières premières.

Dans le mode de réalisation préféré, les impuretés sont tous les constituants autres que les oxydes de lanthane, de strontium, de manganèse et que les combinaisons de ces oxydes.

En particulier, on peut retrouver à titre d'impuretés les éléments Al, Ca, Si, Zr, Na, Ba et Fe. De préférence, la teneur massique totale en impuretés, exprimées sous forme d'oxydes, est inférieure à 0,7 %, de préférence inférieure à 0,4%. De préférence encore,

$Al_2O_3$ < 0,5%, préférence $Al_2O_3$ < 0,1%, et/ou

CaO < 0,25 %, de préférence CaO < 0,05 %, et/ou

$SiO_2$ < 0,1%, de préférence $SiO_2$ < 0,06%, et/ou

$ZrO_2$ < 0,5%, de préférence $ZrO_2$ < 0,05%, et/ou

$Na_2O$ < 0,05%, et/ou

BaO < 0,1 %, de préférence BaO < 0,06 %, et/ou

$Fe_2O_3$ < 0,05%.

A l'issue de l'étape $d_1$), on obtient des particules.

Dans une étape $e_1$) ultérieure optionnelle, les particules sont introduites dans un four pour subir un traitement thermique de recuisson. Avantageusement, une telle recuisson permet d'augmenter encore le taux de pérovskite de lanthane - strontium - manganèse. On obtient ainsi des taux de pérovskite de lanthane - strontium - manganèse sensiblement égaux à 100 % hors impuretés.

La température de recuisson est de préférence comprise entre 1050 et 1400°C, de préférence encore entre 1100°C et 1200°C, et, de préférence toujours, d'environ 1150 °C. Cette température est de préférence maintenue pendant une durée supérieure à 0,5 heure, de préférence supérieure à 2 heures, de préférence d'environ 5 heures. De préférence, le traitement thermique de recuisson est effectué sous une atmosphère contenant au moins 20 % en volume d'oxygène, de préférence sous air, de préférence à la pression ambiante d'environ 1 bar.

Les particules fondues peuvent être broyées, avant ou après recuisson. Si nécessaire, on procède ensuite à une sélection granulométrique, en fonction de l'application visée.

Les particules peuvent avantageusement présenter des dimensions variées, le procédé de fabrication ne se limitant pas à l'obtention de poudres de pérovskite submicroniques. Il est donc parfaitement adapté à une fabrication industrielle.

En outre, les particules obtenues peuvent avantageusement être utilisées pour fabriquer une cathode pour piles à combustible à oxyde solide (SOFC).

Les exemples suivants sont fournis à des fins illustratives. Les particules testées ont été fabriquées de la manière suivante :

Les matières premières de départ suivantes ont d'abord été mélangées intimement dans un mélangeur :

- Poudre de $La_2O_3$, commercialisée par la société TREIBACHER, dont la pureté est supérieure à 99 % en masse et dont la taille médiane est inférieure à 45 $\mu$m ;

- Poudre de $SrCO_3$, commercialisée par la société SPCH, dont la pureté est supérieure à 96 % en masse et dont le passant au tamis de 45 $\mu$m est supérieur à 99 % ;

- Poudre de $MnO_2$, commercialisée par la société DELTA, dont la pureté est supérieure à 91 % en masse et dont la taille médiane est d'environ 45 $\mu$m.

La charge de départ ainsi obtenue, d'une masse de 50 kg, a été versée dans un four de fusion à arc de type Héroult. Elle a ensuite été fondue suivant une fusion en arcs longs (tension de 160 Volts, puissance de 240 KW, l'énergie appliquée variant, selon les exemples, entre 1300 et 2800 kWh/T) de façon à fondre tout le mélange de façon complète et homogène. Les conditions d'élaboration étaient oxydantes.

Dans certains exemples, la qualité du brassage a été améliorée par barbotage d'un gaz contenant 35 % en volume d'oxygène, comme décrit dans FR 1 208 577.

Lorsque la fusion a été complète, le liquide en fusion a été coulé de manière à former un filet. La température du liquide en fusion mesurée lors du coulage était comprise entre 1600 et 1800°C.

Un air sec comprimé, à une pression de 3 bars a été soufflé pour briser le filet et disperser en gouttelettes le liquide en fusion.

Le soufflage a refroidi ces gouttelettes et les a figées sous la forme de particules fondues. Selon les conditions de soufflage, les particules fondues peuvent être sphériques ou non, creuses ou pleines. Elles présentent généralement une taille comprise entre 0,01 mm et 3 mm.

Les analyses chimiques et de détermination de phase de pérovskite de lanthane - strontium - manganèse ont été réalisées sur des échantillons qui présentaient une taille médiane inférieure à 40 $\mu$m.

L'analyse chimique a été effectuée par fluorescence X.

La détermination du taux de pérovskite de lanthane - strontium - manganèse a été effectuée à partir des diagrammes de diffraction X, acquis avec un diffractomètre D5000 de la société BRUKER pourvu d'un tube DX en cuivre. Après fusion et solidification, les produits obtenus peuvent comporter la phase pérovskite ainsi que d'autres phases, en quantités moins importantes, comme $La_2MnO_4$ .

Les phases pérovskite de lanthane - strontium - manganèse sont identifiées, suivant le protocole classique, par diffraction X, au moyen de fiche ICDD. Par exemple, la fiche ICDD00-053-0058 est celle de la phase pérovskite de lanthane - strontium - manganèse $La_{0,8}Sr_{0,2}MnO_3$.

Dans la pratique, les mesures du taux de pérovskite de lanthane - strontium - manganèse sont effectuées lorsque le diagramme de diffraction X montre :

- une phase pérovskite de lanthane - strontium - manganèse majoritaire,

- des phases minoritaires dans le domaine d'angles $2\theta$ compris entre 30,4° et 31,6°, et

- d'autres phases minoritaires qui ne présentent pas de pics dans les domaines d'angles considérés pour la mesure des phases précédemment mentionnées.

Alors, à l'aide du logiciel EVA (commercialisé par la société BRUKER) et après avoir effectué une soustraction du fond continu (background 0,8), il est possible de mesurer l'aire (sans traitement de déconvolution) entre $2\theta = 30,4°$ et 31,6° pour toutes les phases présentes, entre autres $La_2MnO_4$ et l'aire (sans traitement de déconvolution) du doublet principal du pérovskite de lanthane - strontium - manganèse. Le taux de pérovskite de lanthane - strontium - manganèse est alors calculé suivant la formule (1).

Ainsi, si la phase de pérovskite de lanthane - strontium - manganèse est la seule phase en présence dans le diagramme de diffraction X, et donc que $A_{30,4<2\theta<31,6}$ est nul, le taux de pérovskite est égal à 100 %.

Le tableau 1 résume les résultats obtenus avant tout traitement thermique de recuisson.

Tableau 1

| | Tension (Volt) | Energie appliquée (kWh/T) | Barbotage d'un gaz au cours de la fusion | Analyse chimique obtenue $(La_{1-x}Sr_x)_{1-y}MnO_3$ | | Taux de pérovskite de LSM (%) |
|---|---|---|---|---|---|---|
| | | | | x | y | |
| $1_1$ | 160 | 2800 | Non | 0,2 | 0,04 | >99,9 |
| $2_1$ | 160 | 1300 | Non | 0,2 | 0,07 | >99,9 |
| $3_1$ | 160 | 1500 | Oui | 0,2 | 0,07 | >99,9 |

Le tableau 1 permet de mettre en évidence l'efficacité du procédé selon l'invention.

Un traitement thermique a été ensuite réalisé sur le produit de l'exemple $1_1$ dans les conditions suivantes :

Température : 1150 °C
Maintien en palier : 5 heures
Atmosphère : air, pression atmosphérique (ambiante).

Après traitement thermique, le produit présente un taux de pérovskite de lanthane - strontium - manganèse de 100%, hors impuretés.

Un procédé de fabrication d'un bloc fondu, selon le deuxième mode de réalisation, est à présent décrit dans le détail.

A l'étape $a_2$), la charge de départ est déterminée comme à l'étape $a_1$) décrite ci-dessus, les caractéristiques préférées, notamment celles relatives au choix des éléments présents ou à leurs quantités, étant les mêmes que celles de l'étape $a_1$) décrite ci-dessus.

L'homme du métier ajuste la composition de la charge de départ de manière à obtenir, à l'issue de l'étape $e_2$), un bloc. L'analyse chimique du bloc est généralement sensiblement identique à celle de la charge de départ. Mais, le cas échéant, l'homme du métier sait comment adapter la composition de la charge de départ, par exemple pour tenir compte de la présence d'éléments volatils ou de la disparition de certains éléments lors de la fusion.

Un mélange intime des matières premières peut être effectué dans un mélangeur. Ce mélange est ensuite versé dans un four de fusion.

A l'étape $b_2$), la charge de départ est fondue, par exemple dans un four à arc électrique, de façon à fondre toute la charge de départ de façon complète et homogène.

L'électrofusion permet la fabrication de gros blocs, pouvant atteindre 150 mm d'épaisseur, avec des rendements intéressants. On peut par exemple utiliser un four à arc de type Héroult comportant deux électrodes et dont la cuve a un diamètre d'environ 0,8 m et pouvant contenir environ 180 kg de liquide en fusion. De préférence, la tension est comprise entre 140 et 180 Volts, la puissance de l'ordre de 240 kW et l'énergie est comprise entre 1150 à 2800 kWh/T.

Mais tous les fours connus sont envisageables, comme un four à induction, un four à plasma ou d'autres types de four Héroult, pourvu qu'ils permettent de faire fondre complètement la charge de départ. Sans que ce soit systématique, il est possible d'augmenter la qualité du brassage par barbotage d'un gaz oxydant (air ou oxygène par exemple) comme mentionné dans FR 1 208 577. La qualité de brassage du liquide en fusion peut en particulier être améliorée par barbotage d'un gaz contenant 35% en volume d'oxygène.

Le four à induction est préféré entre tous, comme par exemple décrit dans FR 1 430 962. Avantageusement, le bloc peut ainsi être démoulé avant solidification complète, le coeur du bloc étant encore liquide. Comme on le verra dans la suite de la description, ce démoulage anticipé augmente avantageusement la teneur en pérovskite de lanthane - strontium - manganèse.

La température du liquide en fusion mesurée lors du coulage est de préférence comprise entre 1600 et 1800°C.

A l'étape c$_2$), le liquide en fusion est coulé dans un moule apte à résister au bain de liquide en fusion. De préférence, on utilisera des moules en graphite, en fonte, ou tels que définis dans US 3,993,119. Dans le cas d'un four à induction, la spire est considérée comme constituant un moule. Le coulage s'effectue de préférence sous air.

A l'étape d$_2$), le liquide coulé dans le moule est refroidi jusqu'à obtention d'un bloc au moins en partie solidifié.

De préférence, au cours de la solidification, on met du liquide en fusion en contact avec un fluide oxygéné, de préférence gazeux, de préférence avec de l'air. Cette mise en contact peut être effectuée dès la coulée. Cependant, il est préférable de ne commencer cette mise en contact qu'après la coulée. Pour des raisons pratiques, la mise en contact avec le fluide oxygéné ne commence de préférence qu'après le démoulage, de préférence le plus tôt possible après le démoulage.

Le fluide oxygéné comporte de préférence au moins 20%, voire au moins 25%, en volume d'oxygène.

De préférence, on maintient le contact avec le fluide oxygéné jusqu'à la solidification complète du bloc. Ce contact peut être direct, par exemple pour les surfaces du liquide en fusion coulé dans le moule et formant l'interface avec l'air ambiant. Il peut aussi être indirect, par exemple pour le liquide encore en fusion au coeur d'un bloc dont les surfaces extérieures sont déjà solidifiées. L'oxygène doit alors traverser les « parois » ainsi constituées pour atteindre le liquide en fusion.

Ladite mise en contact du liquide en fusion en cours de solidification avec un fluide oxygéné commence de préférence moins de 1 heure, de préférence moins de 30 minutes, de préférence encore moins de 20 minutes après le début de la solidification.

Avantageusement, de manière surprenante et inexpliquée, la mise en contact du liquide en fusion avec un fluide oxygéné augmente de manière remarquable le taux de pérovskite de lanthane - strontium - manganèse au sein du bloc fondu, jusqu'à sensiblement 100%. Aucune étape de recuisson n'est donc nécessaire pour obtenir de telles teneurs.

En outre, les inventeurs ont découvert que la vitesse de refroidissement pendant la solidification n'est pas déterminante pour améliorer la teneur en pérovskite de lanthane - strontium - manganèse. De préférence, la vitesse de refroidissement est donc toujours maintenue inférieure à 1000 K/s, de préférence inférieure à 100 K/s, de préférence inférieure à 50 K/s. Avantageusement, des moyens de refroidissement conventionnels simples peuvent ainsi être mis en oeuvre. De préférence, pour solidifier le liquide en fusion, c'est-à-dire le figer, on n'utilise que des moules en contact avec l'air environnant ou refroidis, notamment par circulation d'un fluide caloporteur, ou lorsque le bloc est extrait du moule et qu'il contient du liquide en fusion, qu'un contact de ce bloc avec le fluide oxygéné. La fiabilité et les coûts en sont améliorés.

A l'étape e$_2$), on démoule le bloc. Pour faciliter la mise en contact du liquide en fusion avec un fluide oxygéné, il est préférable de démouler le bloc le plus rapidement possible, si possible avant solidification complète. La solidification se poursuit donc alors à l'étape e$_2$).

De préférence, le bloc est démoulé dès qu'il présente une rigidité suffisante pour conserver sensiblement sa forme. De préférence, on démoule le bloc le plus rapidement possible et on commence alors immédiatement la mise en contact avec le fluide oxygéné.

De préférence, le démoulage est effectué moins de 20 minutes après le début de la solidification.

Après solidification complète, on obtient un bloc qui contient d'autant plus de pérovskite de lanthane - strontium - manganèse que le liquide en fusion a été mis et maintenu en contact avec de l'oxygène à une étape précoce de la solidification.

Dans une étape f$_2$) optionnelle, le bloc démoulé est enfourné dans un four pour subir un traitement thermique de recuisson. Avantageusement, une telle recuisson permet d'augmenter sensiblement le taux de pérovskite de lanthane - strontium - manganèse. On obtient ainsi des taux de pérovskite de lanthane - strontium - manganèse supérieurs à 99%, de préférence à 99,9%, et même sensiblement égaux à 100%, hors impuretés.

A partir d'un taux de pérovskite de lanthane - strontium - manganèse hors impuretés de 99,9%, la composition et la structure du pérovskite de lanthane - strontium - manganèse peuvent être exprimées par la formule (La$_{1-x}$Sr$_x$)$_{1-y}$MnO$_3$ où $0 < x \leq 0,5$ et $-0,05 \leq y \leq 0,24$, les paramètres x et y de la formule étant les proportions atomiques de chaque élément.

Avantageusement, le traitement thermique de recuisson augmente le taux de pérovskite de lanthane - strontium - manganèse même si aucun liquide en fusion n'a pu être mis en contact avec un fluide oxygéné, par exemple parce que le bloc fabriqué était déjà totalement solidifié au moment du démoulage et qu'aucune mise en contact avec un fluide oxygéné n'a été possible au cours du refroidissement dans le moule ou pendant la coulée.

Les paramètres du traitement thermique de recuisson sont fonction des dimensions des blocs traités. De préférence, ces paramètres sont les suivants :

- Température de recuisson : entre 1050 et 1400 °C, de préférence d'environ 1150°C.
- Durée de maintien en palier : supérieure à 30 minutes, de préférence supérieure à 2 heures, de préférence d'environ 5 heures, à partir du moment où la totalité du bloc a atteint la température de palier (en surface de bloc et en coeur de bloc). A titre d'exemple, pour des blocs dont toutes les dimensions sont inférieures à 5 mm, le temps de maintien en palier sera de préférence d'environ 5 heures. Pour un bloc cylindrique de diamètre 200 mm et de hauteur 150 mm, le temps de maintien en palier sera de préférence d'environ 12 heures.

Dans tous les cas, de préférence, le traitement thermique de recuisson est effectué sous une atmosphère contenant au moins 20% en volume d'oxygène, de préférence sous air, de préférence à la pression ambiante d'environ 1 bar.

Le traitement thermique de recuisson doit être effectué après solidification complète du bloc. Avant d'être recuit, le bloc peut cependant être réduit en morceaux ou en poudre. De préférence, le bloc est broyé sous la forme de particules dont la taille est d'environ 5 mm ou inférieure à 5 mm.

Le procédé conduit à un bloc comportant une majorité de phase de pérovskite de lanthane - strontium - manganèse. En particulier, après traitement thermique de recuisson, le bloc ou les particules recuites présentent un taux de pérovskite de lanthane - strontium - manganèse hors impuretés de plus de 99%, de préférence de plus de 99,9%, de préférence de 100%.

D'autres phases peuvent cependant être présentes, ainsi que des impuretés en provenance des matières premières. Les impuretés sont ici tous les éléments autres que les oxydes de lanthane, de strontium, de manganèse et que les combinaisons de ces oxydes.

En particulier, on peut retrouver à titres d'impuretés les éléments Al, Ca, Si, Zr, Na, Ba et Fe. De préférence, la teneur massique totale en impuretés exprimées sous forme d'oxyde est inférieure à 0,7%, de préférence inférieure à 0,4%. De préférence encore,

- $Al_2O_3 < 0,5\%$, préférence $Al_2O_3 < 0,1\%$, et/ou
- $CaO < 0,25\%$, de préférence $CaO < 0,05\%$, et/ou
- $SiO_2 < 0,1\%$, de préférence $SiO_2 < 0,06\%$, et/ou
- $ZrO_2 < 0,5\%$, de préférence $ZrO_2 < 0,05\%$, et/ou
- $Na_2O < 0,05\%$, et/ou
- $BaO < 0,1\%$, de préférence $BaO < 0,06\%$, et/ou
- $Fe_2O_3 < 0,05\%$.

Le bloc peut avantageusement présenter des dimensions quelconques, le procédé de fabrication ne se limitant pas à l'obtention de poudres de pérovskite submicroniques.

Il est donc parfaitement adapté à une fabrication industrielle. De préférence, le bloc présente une épaisseur supérieure à 1 mm, de préférence supérieure à 2 mm, de préférence supérieure à 5 cm, de préférence encore supérieure à 15 cm, l'épaisseur d'un bloc étant sa plus petite dimension.

Pour obtenir une poudre, par exemple pour fabriquer une cathode pour piles à combustible à oxyde solide (SOFC), le bloc, éventuellement recuit, est ensuite concassé et broyé dans les granulométries désirées. Avantageusement, le procédé permet la fabrication de particules de dimensions variées à un coût réduit.

De préférence, le bloc démoulé est d'abord concassé en morceaux de 0 à 5 mm. Puis un traitement thermique de recuisson est effectué sur ces morceaux, qui sont ensuite broyés dans les granulométries désirées.

Les exemples suivants sont fournis à des fins illustratives. Les blocs testés ont été fabriqués de la manière suivante :

Les matières premières de départ, identiques à celles utilisées pour les exemples du premier mode de réalisation, ont d'abord été mélangées intimement dans un mélangeur.

La charge de départ ainsi obtenue a été versée dans le four de fusion à arc. On a opéré une fusion en arcs longs de façon à fondre tout le mélange de façon complète et homogène. Les conditions d'élaboration étaient oxydantes. La température du liquide en fusion mesurée lors du coulage était comprise entre 1600 et 1800°C.

Le liquide en fusion a ensuite été coulé, sous air, dans différents moules : en fonte, en graphite ou tel que défini selon le brevet US 3,993,119.

La vitesse de refroidissement « Vr » dans le tableau 2 suivant est définie par la formule suivante : Vr = (Tf-

Ts)/t$_r$ où Tf désigne la température du liquide en fusion lors du coulage (en °C), Ts désigne la température du bloc à l'instant où il est complètement solidifié (en °C) et t$_r$ désigne le temps entre le début du coulage et le moment où le bloc est complètement solidifié (en secondes).

Les analyses chimiques et de détermination de phase de pérovskite de lanthane - strontium - manganèse ont été réalisées sur des échantillons broyés en poudre représentatifs des blocs coulés. Ces poudres présentaient un diamètre médian inférieur à 40 $\mu$m.

L'analyse chimique a été effectuée par fluorescence X.

La détermination du taux de pérovskite de lanthane - strontium - manganèse a été effectuée à partir des diagrammes de diffraction X comme décrit ci-dessus dans le cadre des exemples relatifs au premier mode de réalisation.

Les tableaux 2 et 2' résument les résultats obtenus avant tout traitement thermique de recuisson.

- Aucun barbotage de gaz n'a été effectué pendant la fusion.

- Les exemples 8 et 9 concernent des blocs fabriqués suivant un procédé utilisant une fusion par induction selon FR 1 430 962, avec une spire de diamètre 275 mm, une puissance comprise entre 120 et 220 kW et une fréquence délivrée par le générateur apériodique comprise entre 100 et 250 KHz.

- « D999, h888 » désigne un cylindre d'un diamètre D de 999 mm et de hauteur h de 888 mm.

Tableau 2

| Exemple | Tension (Volt) | Energie appliquée (kW/T) | Masse de la charge fondue (kg) | Nature du moule | Vr (°C/s) | Dimensions du bloc coulé (mm) |
|---|---|---|---|---|---|---|
| 1$_2$ | 140 | 1200 | 50 | Suivant US3993119 | 30 | Epaisseur : 5 mm Empreinte de rayon 134 mm |
| 2$_2$ | 150 | 2400 | 46 | Graphite | 0,055 | 180x180x150 |
| 3$_2$ | 150 | 1400 | 46 | Graphite | 0,055 | 180x180x150 |
| 4$_2$ | 150 | 1400 | 46 | Fonte | 0,055 | D200, h150 |
| 5$_2$ | 150 | 1400 | 46 | Fonte | 0,055 | D200, h150 |
| 6$_2$ | 180 | 1400 | 50 | Fonte | 0,055 | D200, h150 |
| 7$_2$ | 180 | 1400 | 50 | Fonte | 0,055 | D200, h150 |
| 8$_2$ | - | - | 75 | Spire de l'inducteur | 0,04 | D275, h 190 |
| 9$_2$ | - | - | 75 | Spire de l'inducteur | 0,04 | D275, h 190 |

Tableau 2'

| Exemple | Analyse chimique En % massiques | | | | pérovskite obtenu $(La_{1-x}Sr_x)_{1-y}MnO_3$ | | Taux de pérovskite de LSM après fusion |
|---|---|---|---|---|---|---|---|
| | La$_2$O$_3$ | SrO | MnO | Impuretés | x | y | |
| 1$_2$ | 56,8 | 9,6 | 33,3 | 0,3 | - | - | 84 |
| 2$_2$ | 58,4 | 8,2 | 33 | 0,4 | - | - | 90 |
| 3$_2$ | 58 | 9,1 | 32,4 | 0,5 | - | - | 88 |
| 4$_2$ | 58,5 | 8,8 | 32,4 | 0,3 | - | - | 92 |
| 5$_2$ | 59 | 8,8 | 31,8 | 0,4 | - | - | 93 |
| 6$_2$ | 57,1 | 9,6 | 32,7 | 0,6 | - | - | 97 |

(suite)

| Exemple | Analyse chimique En % massiques | | | | pérovskite obtenu $(La_{1-x}Sr_x)_{1-y}MnO_3$ | | Taux de pérovskite de LSM après fusion |
|---|---|---|---|---|---|---|---|
| | $La_2O_3$ | SrO | MnO | Impuretés | x | y | |
| $7_2$ | 56,7 | 9,6 | 33,2 | 0,5 | - | - | 97 |
| $8_2$ | 58 | 9,2 | 32,5 | 0,3 | 0,2 | 0,03 | 100 |
| $9_2$ | 51,9 | 9,4 | 38,2 | 0,5 | 0,22 | 0,24 | 99,9 |

Le tableau 2' permet de mettre en évidence l'efficacité du procédé selon l'invention. Il permet également d'observer que lors d'une fusion par induction (exemples $8_2$ et $9_2$), où les surfaces du bloc démoulé étaient plus rapidement en contact avec l'oxygène de l'air (au bout de 20 minutes maximum dans ces exemples, alors que le bloc n'était pas encore complètement solidifié), le taux de pérovskite de lanthane - strontium - manganèse dans le produit final est très élevé, atteignant sensiblement 100%, ce qui, avantageusement, rend inutile le recours à un traitement thermique de recuisson.

Les exemples $1_2$, $2_2$, $4_2$ et $5_2$ ont ensuite subi un traitement thermique de recuisson (tableau 2). Ce traitement thermique de recuisson a été effectué sur des blocs coulés ou sur des blocs concassés en 0-5 mm (exemple 1). Les paramètres des traitements thermiques utilisés sont précisés dans le tableau 3. Ces traitements thermiques ont été réalisés sous air.

Tableau 3

| | Dimensions | Paramètres du traitement thermique de recuisson | | | Analyse chimique obtenue après traitement thermique $(La_{1-x}Sr_x)_{1-y}MnO_3$ | | Taux de pérovskite de LSM après traitement thermique |
|---|---|---|---|---|---|---|---|
| | | Température (°C) | Palier (heures) | atmosphère | x | y | |
| $1_2$ | 0 à 5 mm | 1150 | 5 | Air | 0,21 | 0,06 | 100 |
| $2_2$ | 180x180x150 | 1150 | 12 | Air | 0,18 | 0,06 | 100 |
| $4_2$ | D200, h150 | 1150 | 12 | Air | 0,19 | 0,03 | 100 |
| $5_2$ | D200, h150 | 1150 | 12 | Air | 0,19 | 0 | 100 |

Le tableau 3 montre que ce traitement conduit à une augmentation notable du taux de pérovskite de lanthane - strontium - manganèse, jusqu'à sensiblement 100%.

Comme cela apparaît clairement à présent, le procédé permet de fabriquer de manière simple et économique, en quantités industrielles, des produits, et notamment des particules et des blocs, présentant des taux de pérovskite de lanthane - strontium - manganèse élevés et présentant l'analyse chimique suivante, en pourcentages massiques et pour un total de 100% :

36% < Lanthane exprimé sous la forme $La_2O_3$ < 70,7%
0% < Strontium exprimé sous la forme SrO < 25,8%
29,3% < Manganèse exprimé sous la forme MnO < 41,2%
Impuretés < 0,7%

Ce procédé permet même de fabriquer des produits présentant, hors impuretés, des taux de pérovskite de lanthane - strontium - manganèse de formule $(La_{1-x}Sr_x)_{1-y}MnO_3$, avec $0 < x \leq 0,5$ et $-0,05 \leq y \leq 0,24$, de plus de 99,9%, voire de 100%.

Les dimensions de ces produits peuvent ensuite être réduites, les produits étant par exemple broyés sous forme de poudres si leur utilisation l'exige.

Au-delà de l'élément strontium, on décrit un produit, notamment sous la forme d'une particule ou d'un bloc, comportant du pérovskite de LTM, L désignant le lanthane, T étant un élément choisi parmi le strontium, le calcium, le magnésium, le baryum et des mélanges de ces éléments, éventuellement en mélange avec l'yttrium et/ou l'ytterbium et/ou le cérium, et M désignant le manganèse. L'invention concerne des procédés de fabrication de ce produit.

Les modes de réalisation relatifs à ces produits et procédés, où l'élément T n'est pas limité au strontium, sont qualifiés de « généralisés ».

Il est habituel d'exprimer la structure d'un tel pérovskite de LTM sous la forme $ABO_3$. En toute rigueur, un tel pérovskite présente cependant une structure du type $(La_{(1-x)}T_x)_{(1-y)} Mn O_{(3-\delta)}$. Les valeurs de x et y peuvent être déterminées à partir de diagrammes de diffraction X, et/ou par analyse chimique si le produit comporte un taux de pérovskite de LTM supérieur à 99,9 % et si la somme des éléments constituant ce pérovskite est supérieure à 99 %, en pourcentage massique sur la base des oxydes. Le pérovskite étant neutre électriquement, la valeur $\delta$ correspond en effet à la valeur nécessaire pour assurer l'électroneutralité de la structure pérovskite. Il est généralement admis que la valeur de $\delta$ dépend essentiellement de l'état de valence de l'élément manganèse.

Les poudres de pérovskite de LTM susmentionnées sont notamment utilisées pour la fabrication de cathodes pour piles à combustible à oxyde solide, selon des procédés complexes et coûteux, comme décrits en introduction. Il existe donc un besoin pour des produits comportant du pérovskite de LTM et qui puissent être fabriqués, à coûts réduits et en quantité industrielle. Un but de l'invention est de satisfaire ce besoin.

Plus précisément, dans les piles à combustible à oxyde solide (SOFC) actuelles, chaque électrode est en général divisée en deux couches. Dans le cas particulier de la cathode, une première couche joue le rôle de collecteur de courant (CCL). Une des matières premières utilisées en tant que matériau de cathode dans la technologie SOFC est une poudre de pérovskite de lanthane dopé - manganèse (LTM).

La couche active dans la cathode (« cathode functional layer», CFL), située entre la couche CCL et l'électrolyte, doit permettre à la fois de fournir des électrons au système pour réduire l'oxygène de l'air en ions $O^{2-}$ et transporter ces ions $O^{2-}$ jusqu'à l'électrolyte. Pour cela, la couche active CFL est en général composée d'un mélange d'un matériau conducteur ionique et d'un matériau conducteur électronique (pérovskite de lanthane dopé - manganèse). Le contact entre les deux matériaux et l'air doit être optimum, c'est-à-dire que le nombre de points triples doit être maximal et il doit y avoir percolation des grains pour chaque matériau.

Les zircones dopées (zircone cubique stabilisée à l'oxyde d'yttrium, zircone cubique stabilisée au scandium, ...) sont couramment utilisées comme matériaux d'électrolyte ou dans la couche de cathode fonctionnelle.

Le contact entre la poudre de zircone dopée et la poudre de pérovskite de lanthane dopé - manganèse est donc intime et le nombre de points de contact entre ces deux poudres est élevé.

Or les pérovskites de lanthane dopé - manganèse du matériau de cathode peuvent réagir avec la zircone dopée de l'électrolyte ou de la couche de cathode fonctionnelle pour former de nouvelles phases à leur interface, en particulier une phase de type pyrochlore $La_2Zr_2O_7$, notamment quand, dans la formule du pérovskite de LTM x est inférieur à 0,4, voire 0,3. La présence de cette phase diminue les performances de la pile.

Afin d'augmenter les performances des piles SOFC, il existe donc un besoin pour un pérovskite de lanthane dopé - manganèse, apte à ne former qu'une faible quantité de phase de type pyrochlore $La_2Zr_2O_7$ lorsqu'il est en contact avec une poudre de zircone dopée.

Un autre but de l'invention est de satisfaire ce besoin.

Selon l'invention, on atteint ces buts au moyen d'un procédé de fabrication d'un produit fondu, notamment sous la forme d'une particule ou d'un bloc, comportant du pérovskite de LTM, L désignant le lanthane, T étant un élément choisi parmi le strontium, le calcium, le magnésium, le baryum, et des mélanges de ces éléments, éventuellement en mélange avec l'yttrium et/ou l'ytterbium et/ou le cérium, et M désignant le manganèse.

Le produit peut notamment se présenter sous la forme d'une poudre. La taille des particules peut notamment être supérieure à 1 $\mu$m, voire supérieure à 10 $\mu$m ou à 0,25 mm et/ou inférieure à 3 mm.

Cette poudre peut en particulier comporter plus de 90 % en poids, voire plus de 95 %, voire sensiblement 100 % de particules fondues de pérovskite de LTM selon l'invention.

Le produit est fondu, c'est-à-dire qu'il est obtenu par fusion puis solidification. Bien que la fabrication de produits par fusion-solidification soit bien connue, c'est le mérite des inventeurs d'avoir découvert que cette technique permet de fabriquer des produits contenant du pérovskite de LTM. Avantageusement, le produit peut donc être fabriqué à coûts réduits et en quantités industrielles.

Le produit peut être un produit recuit ou un produit non recuit, c'est-à-dire n'ayant subi aucun traitement thermique après sa solidification.

En outre, comme on le verra plus en détail dans la suite de la description, le produit, lorsqu'il est en contact avec de la poudre de zircone dopée à l'oxyde d'yttrium, génère systématiquement moins de phase de type pyrochlore $La_2Zr_2O_7$ que les produits de même composition chimique selon la technique antérieure. Il est donc très bien adapté à la fabrication de cathodes de piles SOFC.

La teneur et la nature du pérovskite de LTM obtenu dépendent notamment de la composition de la charge de départ. Le produit est cependant toujours polycristallin.

Dans un mode de réalisation de l'invention, le produit fondu comporte un taux de pérovskite de LTM supérieur à 50 %, hors impuretés, ledit pérovskite présentant des teneurs molaires $l_p$, $t_p$ et $m_p$ en lanthane, en élément T et en manganèse, respectivement, telles que, en posant x = $t_p / (l_p + t_p)$ et y = 1 - $(l_p + t_p)/m_p$,

- x > 0, de préférence x > 0,02, de préférence x > 0,15 et/ou x ≤ 0,5, de préférence x ≤ 0,4, de préférence x < 0,35, de préférence x ≤ 0,3, de préférence x < 0,25, et
- y > -0,1, de préférence y ≥ -0,05, de préférence y ≥ 0, et/ou y ≤ 0,24, de préférence y ≤ 0,1.

Les variables x et y correspondent aux proportions atomiques x et y de la structure $(La_{(1-x)}T_x)_{(1-y)}MnO_{3-\delta}$ du pérovskite de LTM du produit.

La définition du taux de pérovskite de LTM d'un produit est donnée ultérieurement dans cette description.

De préférence, le produit comporte encore une, et de préférence plusieurs, des caractéristiques optionnelles suivantes :

- Le taux de pérovskite de LTM, hors impuretés, est supérieur à 70 %, de préférence supérieur à 90 %, de préférence supérieur à 99 %, de préférence encore supérieur à 99,9 %, voire de 100 %.

- Le produit est obtenu suivant un procédé conforme à l'invention, décrit plus en détail ci-après.

- L'élément T utilisé est choisi dans le groupe formé par le calcium, le strontium, le baryum, le magnésium et leurs mélanges. De préférence, l'élément T est le calcium et/ou le strontium.

- La teneur en impuretés est inférieure à 1%, de préférence inférieure à 0,7%.

Avantageusement, ces caractéristiques améliorent les propriétés de conductivité électrique, rendant les produits particulièrement adaptés, après broyage éventuel, à la fabrication de cathodes pour piles à combustible à oxyde solide (SOFC).

Le produit peut ne pas avoir subi de traitement thermique de recuisson après refroidissement et/ou ne pas résulter d'un broyage.

L'invention concerne un procédé de fabrication d'un produit fondu selon la revendication 1.

Par simple adaptation de la composition de la charge de départ, des procédés de fusion-solidification classiques permettent ainsi de fabriquer, à partir d'un liquide fondu, des produits fondus de différentes tailles présentant un taux de pérovskite de LTM, hors impuretés, supérieur à 50 %, de préférence supérieur à 70%, de préférence supérieur à 90 %, de préférence encore supérieur à 99 %, de préférence toujours supérieur à 99,9 %, voire de sensiblement 100%.

Cette découverte, particulièrement surprenante, va à l'encontre des préjugés techniques qui, jusqu'à aujourd'hui, conduisaient l'homme du métier à ne s'intéresser qu'aux procédés complexes et coûteux décrits ci-dessus.

De préférence, le procédé de fabrication selon l'invention comporte encore une, et de préférence plusieurs, des caractéristiques optionnelles générales suivantes :

- Le choix de l'élément T et des quantités de lanthane, d'élément T et de manganèse dans la charge de départ est déterminé de manière que les produits obtenus en fin d'étape c') soient conformes à l'invention.

- L'élément T est un dopant du lanthane choisi dans le groupe formé par le calcium, le strontium, le baryum, le magnésium et leurs mélanges. Ces dopants améliorent en effet significativement la conductivité du pérovskite de LTM.

- Au moins un des éléments L, T et M est introduit sous forme oxyde.

- Les composés apportant les éléments L, T et M représentent ensemble plus de 99 %, en pourcentages massiques, des constituants de la charge de départ. De préférence ces composés représentent, ensemble avec les impuretés, 100% des constituants de la charge de départ.

- Les composés apportant les éléments L, T et M sont choisis parmi $SrO$, $SrCO_3$, $La_2O_3$, $CaO$, $CaCO_3$, $Y_2O_3$, $Yb_2O_3$, $MgO$, $MgCO_3$, $CeO_2$, $BaO$, $MnO_2$, $MnO$ ou $Mn_3O_4$.

- A l'étape b'), on n'utilise pas une torche à plasma, ni un pistolet thermique. En particulier, on utilise un four à arc ou par induction.

Dans un premier mode de réalisation généralisé, l'invention se rapporte à un procédé de fabrication de particules.

En particulier, l'invention concerne un procédé de fabrication comportant les étapes a'), b') et c'), l'étape c') comportant les étapes suivantes :

$c_1$') dispersion du liquide en fusion sous forme de gouttelettes liquides,
$d_1$') solidification de ces gouttelettes liquides par contact avec un fluide oxygéné, de manière à obtenir des particules fondues.

De préférence, ce procédé est adapté de manière à obtenir des particules en un produit de pérovskite de LTM décrit ci-dessus.

Par simple adaptation de la composition de la charge de départ, des procédés de dispersion classiques, en particulier par soufflage ou atomisation, permettent ainsi de fabriquer, à partir d'un liquide fondu, des particules de différentes tailles présentant un taux de pérovskite de LTM, hors impuretés, supérieur à 50 %, de préférence supérieur à 70 %, de préférence encore supérieur à 90 %, de préférence encore supérieur à 99 %, de préférence toujours supérieur à 99,9 %, voire de sensiblement 100%.

Dans le premier mode de réalisation généralisé, de préférence, le procédé de fabrication selon l'invention comporte encore une, et de préférence plusieurs, des caractéristiques optionnelles générales listées ci-dessus et/ou des caractéristiques particulières suivantes :

- A l'étape $b_1$'), on n'utilise pas une torche à plasma, ni un pistolet thermique. Par exemple, on utilise un four à arc. Avantageusement, la productivité en est améliorée. En outre, les procédés mettant en oeuvre une torche à plasma ou un pistolet thermique ne permettent généralement pas de fabriquer des particules de taille supérieure à 200 microns, et à tout le moins supérieure à 500 microns.

- A l'étape $c_1$') et/ou à l'étape $d_1$'), on met en contact ledit liquide en fusion avec un fluide oxygéné, de préférence identique à celui mis en oeuvre à l'étape $d_1$').

- Le fluide oxygéné, de préférence gazeuse, de préférence l'air, comporte au moins 20 %, voire au moins 25%, en volume d'oxygène.

- Les étapes de dispersion et de solidification sont simultanées.

- On maintient un contact entre les gouttelettes et un fluide oxygéné jusqu'à la solidification complète desdites gouttelettes.

- On peut recuire les particules fondues. De préférence, ces particules sont recuites à une température comprise entre 1050 et 1400 °C, de préférence d'environ 1150°C, pendant un temps de palier en température d'au moins 30 minutes, de préférence supérieur à 2 heures, de préférence d'environ 5 heures. De préférence encore, elles sont recuites sous une atmosphère contenant au moins 20% en volume d'oxygène, de préférence sous air, de préférence à pression atmosphérique.

Les particules fondues peuvent être broyées et/ou subir une opération de sélection granulométrique en fonction des applications visées, par exemple par tamisage, en particulier de manière que les particules obtenues présentent une taille supérieure à 1 $\mu$m, voire supérieure à 10 $\mu$m et/ou inférieure à 3 mm.

Dans un deuxième mode de réalisation généralisé, l'invention se rapporte à un procédé de fabrication d'un bloc.

En particulier, l'invention concerne un procédé de fabrication comportant les étapes a'), b') et c'), l'étape c') comportant les étapes, suivantes :

$c_2$') coulage du liquide en fusion dans un moule ;
$d_2$') solidification par refroidissement du liquide coulé dans le moule jusqu'à obtention d'un bloc au moins en partie solidifié ;
e2') démoulage du bloc.

Dans le deuxième mode de réalisation généralisé, de préférence, le procédé de fabrication selon l'invention comporte encore une, et de préférence plusieurs, des caractéristiques optionnelles générales listées ci-dessus et/ou des caractéristiques particulières suivantes :

- A l'étape $b_2$'), on utilise un four par induction.

- A l'étape $c_2$') et/ou à l'étape $d_2$') et/ou après l'étape $e_2$'), on met en contact, directement ou indirectement, dudit liquide en fusion en cours de solidification avec un fluide oxygéné, comportant de préférence au moins 20 %, voire au moins 25%, en volume d'oxygène, de préférence un gaz, de préférence encore de l'air.

- On commence ledit contact immédiatement après démoulage du bloc.

- On maintient ledit contact jusqu'à la solidification complète du bloc.

- On procède au démoulage de l'étape $e_2$') avant solidification complète du bloc.

- On démoule le bloc dès qu'il présente une rigidité suffisante pour conserver sensiblement sa forme.

- La vitesse de refroidissement du liquide en fusion pendant la solidification est toujours inférieure à 1000 K/s, de préférence inférieure à 100 K/s, de préférence encore inférieure à 50 K/s. Dans le cas où on utilise un moule en fonte ou en graphite, la vitesse de refroidissement est de préférence inférieure à 1 K/s.

- Après l'étape $e_2$'), on recuit le bloc démoulé. De préférence, le bloc est recuit à une température comprise entre 1050°C et 1400°C, de préférence 1150°C, pendant un temps de palier en température, compté à partir du moment où la totalité du bloc a atteint la température de palier (en surface de bloc et en coeur de bloc) de préférence supérieur à 30 minutes, de préférence supérieur à 2 heures, de préférence d'environ 5 heures. De préférence encore, le bloc est recuit sous une atmosphère contenant au moins 20% en volume d'oxygène, de préférence sous air, de préférence à pression atmosphérique.

- Le bloc démoulé, éventuellement recuit, est réduit en morceaux ou en poudre.

Quel que soit le mode de réalisation considéré, d'autres phases que le pérovskite de LTM peuvent être présentes, ainsi que des impuretés en provenance des matières premières.
Dans le mode de réalisation préféré, les impuretés sont tous les éléments autres que le lanthane, l'élément T, le manganèse et les combinaisons de ces éléments.
En particulier, on peut retrouver à titre d'impuretés les éléments Al, Si, Zr, Na et Fe, voire Ba, Sr, Mg, Y, Yb, Ce ou Ca lorsque l'élément T ne comporte pas, respectivement, de baryum, de strontium, de magnésium, d'yttrium, d'ytterbium, de cérium ou de calcium. De préférence, la teneur massique totale en impuretés, exprimées sous forme d'oxydes, est inférieure à 1 %, de préférence inférieure à 0,7%, de préférence encore inférieure à 0,4%. De préférence encore,
$Al_2O_3 < 0,5\%$, de préférence $Al_2O_3 < 0,15\%$, de préférence encore $Al_2O_3 < 0,1\%$, et/ou
$SiO_2 < 0,1\%$, de préférence $SiO_2 < 0,07\%$, de préférence $SiO_2 < 0,06\%$, et/ou
$ZrO_2 < 0,5\%$, de préférence $ZrO_2 < 0,1\%$, de préférence $ZrO_2 < 0,05\%$, et/ou $Na_2O < 0,1\%$, de préférence $Na_2O < 0,07\%$, de préférence $Na_2O < 0,05\%$, et/ou
$Fe_2O_3 < 0,05\%$.
L'invention concerne enfin l'utilisation de produits fondus fabriqués par un procédé selon l'invention dans la fabrication de cathodes pour piles à combustible à oxyde solide (SOFC).
On définit le taux de pérovskite de LTM hors impuretés, en %, selon la formule (1) suivante :

$$T = 100* (A_{LTM})/ (A_{LTM} + A_{Phase\ secondaire}) \qquad (1)$$

où

- $A_{LTM}$ est l'aire mesurée sur un diagramme de diffraction X obtenu à partir d'un appareil du type diffractomètre D5000 de la société BRUKER pourvu d'un tube DX en cuivre, sans traitement de déconvolution, du pic principal ou du multiplet principal de diffraction des phases pérovskites de LTM obtenues ;
- $A_{Phase\ secondaire}$ est l'aire mesurée sur le même diagramme, sans traitement de déconvolution, du pic principal ou multiplet principal de diffraction de la phase secondaire. La phase secondaire est la phase minoritaire présentant le pic principal ou le multiplet d'aire la plus grande, sans considérer la phase pérovskite de LTM. Entre autres, la phase $La_2MnO_4$ peut être la phase secondaire identifiée sur le diagramme de diffraction X.

Un multiplet est la superposition partielle de plusieurs pics. Par exemple, un multiplet composé de deux pics est un doublet, un multiplet composé de trois pics est un triplet.
Un procédé selon le premier mode de réalisation généralisé de l'invention est à présent décrit dans le détail.

A l'étape a₁'), une charge de départ permettant de fabriquer selon l'invention une particule est formée à partir de composés de lanthane, d'élément T et de manganèse, notamment sous forme d'oxydes ou de carbonates, ou de précurseurs des éléments lanthane, T et manganèse. L'ajustement des compositions peut se faire par addition d'oxydes purs ou de mélanges d'oxydes et/ou de précurseurs, notamment SrO, SrCO₃, La₂O₃, CaO, CaCO₃, Y₂O₃, Yb₂O₃, MgO, MgCO₃, CeO₂, BaO, MnO₂, MnO ou Mn₃O₄. La mise en oeuvre d'oxydes et/ou de carbonates améliore la disponibilité d'oxygène nécessaire à la formation de pérovskite et est donc préférée.

Les quantités de lanthane, d'élément T et de manganèse de la charge de départ se retrouvent pour l'essentiel dans le produit fondu fabriqué. Une partie des constituants, variable en fonction des conditions de fusion, peut se volatiliser pendant l'étape de fusion. Par ses connaissances générales, ou par de simples essais de routine, l'homme du métier sait comment adapter la quantité de ces constituants dans la charge de départ en fonction de la teneur qu'il souhaite retrouver dans les produits fondus et des conditions de fusion mises en oeuvre.

Les granulométries des poudres utilisées peuvent être celles couramment rencontrées dans les procédés de fusion.

Le mélange de base peut comporter, outre les composés apportant les éléments lanthane, T et manganèse, et les impuretés, d'autres composés introduits pour conférer une propriété particulière aux particules fabriquées.

De préférence cependant, aucun composé autre que ceux apportant les éléments lanthane, T et manganèse, en particulier aucun composé autre que La₂O₃, SrO, SrCO₃, MnO₂, MnO, Mn₃O₄, CaO, CaCO₃, Y₂O₃, Yb₂O₃, MgO, MgCO₃, CeO₂, BaO n'est introduit volontairement dans la charge de départ, les autres éléments présents étant des impuretés. Dans un mode de réalisation, la somme de La₂O₃, SrO, SrCO₃, MnO₂, MnO, Mn₃O₄, CaO, Y₂O₃, Yb₂O₃, MgO, CeO₂, BaO et de leurs précurseurs représente plus de 99% en poids de la charge de départ.

De préférence, les composés apportant les éléments lanthane, T et manganèse sont choisis parmi La₂O₃, SrO, SrCO₃, MnO₂, MnO, Mn₃O₄, CaO, CaCO₃ et leurs précurseurs, la somme de ces constituants représentant de préférence plus de 99% en poids de la charge de départ. De préférence toujours, aucun composé autre que La₂O₃, SrO, SrCO₃, MnO₂, MnO, Mn₃O₄, CaO, CaCO₃ n'est introduit volontairement dans la charge de départ, les autres éléments présents étant des impuretés.

Pour augmenter la teneur en pérovskite de LTM, il est préférable que les proportions molaires des éléments L, T et M dans la charge de départ soient proches de celles du pérovskite que l'on souhaite fabriquer.

Ainsi, il est préférable, dans la charge de départ, que les teneurs molaires $l_d$, $t_d$ et $m_d$ des éléments L, T et M, respectivement, en pourcentages molaires sur la base de la somme des teneurs $l_l$, $t_d$ et $m_d$, respectent les conditions suivantes :

- 
$$k_1. (1-x).(1-y) \leq l_d/m_d \leq k_2.(1-x).(1-y) \qquad (1),$$

et/ou

- 
$$k_1. x.(1-y) \leq t_d/m_d \leq k_2. x.(1-y) \qquad (2)$$

où

- x et y peuvent prendre les valeurs définies ci-dessus, en particulier
  $0 < x \leq 0,5$ et $-0,1 \leq y \leq 0,24$,
- $k_1$ est égal à 0,8, de préférence à 0,9, et
- $k_2$ est égal à 1,2, de préférence à 1,1.

Bien entendu, ces valeurs de $k_1$ et $k_2$ sont celles à adopter dans des conditions de marche établie, c'est à dire en dehors des phases de transition entre compositions différentes et en dehors des phases de démarrage. En effet, si le produit souhaité implique un changement de composition de la charge de départ par rapport à celle mise en oeuvre pour fabriquer le produit précédent, il faut tenir compte des résidus du produit précédent dans le four. L'homme du métier sait cependant adapter la charge de départ en conséquence.

Un mélange intime des matières premières peut être effectué dans un mélangeur. Ce mélange est ensuite versé dans un four de fusion.

A l'étape b₁'), la charge de départ est fondue, de préférence dans un four à arc électrique. L'électrofusion permet en effet la fabrication de grandes quantités de particules avec des rendements intéressants.

On peut par exemple utiliser un four à arc de type Héroult comportant deux électrodes et dont la cuve a un diamètre d'environ 0,8 m et pouvant contenir environ 180 kg de liquide en fusion. De préférence, la tension est comprise entre 140 et 180 Volts, la puissance de l'ordre de 240 kW et l'énergie est comprise entre 1150 à 2800 kWh/T.

Des fours envisageables sont un four à induction ou d'autres types de four Héroult, pourvu qu'ils permettent de faire fondre complètement la charge de départ. Sans que ce soit systématique, il est possible d'augmenter la qualité du brassage par barbotage d'un gaz oxydant (air ou oxygène par exemple) comme mentionné dans FR 1 208 577. La qualité de brassage du liquide en fusion peut en particulier être améliorée par barbotage d'un gaz contenant 35% en volume d'oxygène.

A la fin de l'étape $b_1$'), toute la charge de départ est sous forme liquide.

A l'étape $c_1$'), un filet du liquide en fusion, à une température de préférence supérieure à 1600°C et, de préférence inférieure à 2200°C, de préférence encore inférieure à 1800 °C lorsque l'élément T est du strontium, est dispersé en petites gouttelettes liquides.

La dispersion peut résulter d'un soufflage à travers le filet de liquide en fusion. Mais tout autre procédé d'atomisation d'un liquide en fusion, connu de l'homme de l'art, est envisageable.

A l'étape $d_1$'), les gouttelettes liquides sont transformées en particules solides par contact avec un fluide oxygéné, de préférence gazeux, de préférence encore avec de l'air et/ou de la vapeur d'eau. Le fluide oxygéné comporte de préférence au moins 20 %, voire au moins 25%, en volume d'oxygène.

De préférence, le procédé est adapté de manière que, sitôt formée, la gouttelette de liquide en fusion soit en contact avec le fluide oxygéné. De préférence encore, la dispersion (étape $c_1$')) et la solidification (étape $d_1$')) sont sensiblement simultanées, le liquide en fusion étant dispersé par un fluide oxygéné apte à refroidir et solidifier ce liquide.

De préférence, le contact avec le fluide oxygéné est maintenu au moins jusqu'à la solidification complète des particules.

De préférence, aucun autre moyen de solidification qu'un refroidissement par contact avec le fluide oxygéné n'est utilisé. Ainsi par exemple, de préférence, on ne met pas en oeuvre de procédé d'hyper trempe par projection des gouttelettes de liquide en fusion sur une paroi métallique refroidie.

Un soufflage d'air à température ambiante est bien adapté.

La vitesse de refroidissement est fonction du diamètre des particules. Elle est d'environ de 1000 K/s pour des particules de taille de 0,3 mm. De préférence, la vitesse de refroidissement est adaptée de manière à ce que les particules soient durcies, au moins en périphérie, avant d'entrer en contact avec le conteneur de récupération.

A l'issue de l'étape $d_1$'), on obtient des particules solides qui présentent une taille comprise entre 0,01 et 3 mm, voire entre 0,01 et 4 mm, en fonction des conditions de dispersion.

Avantageusement, de manière surprenante et inexpliquée, la mise en contact du liquide en fusion avec un fluide oxygéné permet d'obtenir en quantités industrielles et à un coût réduit un taux de pérovskite de LTM hors impuretés remarquable, atteignant plus de 90 %, et même plus de 99,9 %, sans étape de recuisson.

Dans une étape $e_1$') ultérieure optionnelle, les particules fondues sont introduites dans un four pour subir un traitement thermique de recuisson. Avantageusement, une telle recuisson permet d'augmenter encore le taux de pérovskite de LTM. On obtient ainsi des taux de pérovskite de LTM sensiblement égaux à 100 % hors impuretés.

La température de recuisson est de préférence comprise entre 1050 et 1400 °C, de préférence encore entre 1100°C et 1200°C, et, de préférence toujours, d'environ 1150 °C. Cette température est de préférence maintenue pendant une durée supérieure à 0,5 heure, de préférence supérieure à 2 heures, de préférence d'environ 5 heures. De préférence, le traitement thermique de recuisson est effectué sous une atmosphère contenant au moins 20 % en volume d'oxygène, de préférence sous air, de préférence à la pression ambiante d'environ 1 bar.

Les particules fondues peuvent être broyées, avant ou après recuisson. Si nécessaire, on procède ensuite à une sélection granulométrique, en fonction de l'application visée.

Les particules peuvent avantageusement présenter des dimensions variées, le procédé de fabrication ne se limitant pas à l'obtention de poudres de pérovskite submicroniques. Il est donc parfaitement adapté à une fabrication industrielle.

En outre, les particules obtenues peuvent avantageusement être utilisées pour fabriquer une cathode pour piles à combustible à oxyde solide (SOFC).

Les exemples suivants sont fournis à des fins illustratives et ne limitent pas l'invention. Les particules testées ont été fabriquées de la manière suivante.

Les matières premières de départ suivantes ont d'abord été mélangées intimement dans un mélangeur :

- Poudre de $La_2O_3$, commercialisée par la société TREIBACHER, dont la pureté est supérieure à 99 % en masse et dont la taille médiane est inférieure à 45 $\mu$m ;

- Poudre de CaO, commercialisée par la société LA GLORIETTE, dont la pureté est supérieure à 93 % en masse et dont le passant au tamis de 80 $\mu$m est supérieur à 90 %;

- Poudre de $MnO_2$, commercialisée par la société DELTA, dont la pureté est supérieure à 91 % en masse et dont la taille médiane est d'environ 45 $\mu$m.

La charge de départ ainsi obtenue, d'une masse de 50 kg, a été versée dans un four de fusion à arc de type Héroult. Elle a ensuite été fondue suivant une fusion en arcs longs (tension de 150 Volts, puissance de 225 KW, l'énergie appliquée variant, selon les exemples, entre 1380 et 2000 kWh/T) de façon à fondre tout le mélange de façon complète et homogène. Les conditions d'élaboration étaient oxydantes.

Lorsque la fusion a été complète, le liquide en fusion a été coulé de manière à former un filet. La température du liquide en fusion mesurée lors du coulage était comprise entre 1730 et 1850°C.

Un soufflage d'air sec comprimé, à température ambiante et à une pression comprise entre 1 et 3 bars, brise le filet et disperse en gouttelettes le liquide en fusion.

Le soufflage refroidit ces gouttelettes et les fige sous la forme de particules fondues. Selon les conditions de soufflage, les particules fondues peuvent être sphériques ou non, creuses ou pleines. Elles présentent une taille comprise entre 0,01 mm et 3 mm, voire entre 0,01 et 4 mm.

Les analyses chimiques et de détermination de phase de pérovskite de lanthane - calcium - manganèse ont été réalisées sur des échantillons qui présentaient, après broyage, une taille médiane inférieure à 40 $\mu$m.

L'analyse chimique a été effectuée par fluorescence X.

La détermination du taux de pérovskite de lanthane - calcium - manganèse a été effectuée à partir des diagrammes de diffraction X, acquis avec un diffractomètre D5000 de la société BRUKER pourvu d'un tube DX en cuivre. Après fusion, les produits obtenus peuvent comporter la phase pérovskite ainsi que d'autres phases, en quantités moins importantes, comme $La_2MnO_4$.

Les phases pérovskite de lanthane - calcium - manganèse sont identifiées, suivant le protocole classique, par diffraction X, au moyen de fiches ICDD (« International Center for Diffraction Data »). Par exemple, la fiche ICDD 01-089-8084 est celle de la phase pérovskite de lanthane - calcium - manganèse $La_{0,7}Ca_{0,3}MnO_{3-\delta}$.

Dans la pratique, les mesures du taux de pérovskite de lanthane - calcium - manganèse sont effectuées lorsque le diagramme de diffraction X montre :

- une phase pérovskite de lanthane - calcium - manganèse majoritaire,

- une phase secondaire et éventuellement d'autres phases minoritaires.

Alors, à l'aide du logiciel EVA (commercialisé par la société BRUKER) et après avoir effectué une soustraction du fond continu (background 0,8), il est possible de mesurer l'aire $A_{LTM}$ (sans traitement de déconvolution) du pic principal ou multiplet principal de diffraction du pérovskite de lanthane - calcium - manganèse et l'aire $A_{phase}$ secondaire (sans traitement de déconvolution) du pic principal ou multiplet principal de diffraction de la phase secondaire. Le taux de pérovskite de lanthane - calcium - manganèse est alors calculé suivant la formule (1).

Ainsi, si la phase de pérovskite de lanthane - calcium - manganèse (LCM) est la seule phase en présence dans le diagramme de diffraction X, le taux de pérovskite est égal à 100 %.

Le tableau 4 résume les résultats obtenus avant tout traitement thermique de recuisson.

Tableau 4

| Exemple | Tension (Volt) | Energie appliquée (kWh/T) | Analyse chimique obtenue $(La_{1-x}Ca_x)_{1-y}MnO_{3-\delta}$ | | Taux de pérovskite de LCM (%) |
|---|---|---|---|---|---|
| | | | x | y | |
| $1_1$' | 150 | 1480 | 0,2 | 0 | >99,9 |
| $2_1$' | 150 | 1500 | 0,21 | 0,01 | >99,9 |
| $3_1$' | 150 | 1420 | 0,09 | 0,1 | >99,9 |
| $4_1$' | 150 | 1440 | 0,14 | 0,06 | >99,9 |
| $5_1$' | 150 | 1380 | 0,33 | -0,07 | >99,9 |
| $6_1$' | 150 | 2000 | 0,36 | -0,1 | >99,9 |

Le tableau 4 permet de mettre en évidence l'efficacité du procédé selon l'invention.

Un traitement thermique a été ensuite réalisé sur le produit de l'exemple 6 dans les conditions suivantes :

Température : 1150 °C
Maintien en palier : 5 heures
Atmosphère : air, pression atmosphérique (ambiante).

Après traitement thermique, le produit présente un taux de pérovskite de lanthane - calcium - manganèse de 100%, hors impuretés.

Comme cela apparaît clairement à présent, le procédé selon le premier mode de réalisation généralisé de l'invention permet de fabriquer de manière simple et économique, en quantités industrielles, des particules comportant de grandes quantités pérovskite de lanthane - élément T - manganèse, l'élément T étant un élément choisi dans le groupe constitué par le strontium, le calcium, le magnésium, le baryum et des mélanges de ces éléments, éventuellement en mélange avec l'yttrium et/ou l'ytterbium et/ou le cérium.

En particulier, ce procédé permet de fabriquer des particules constituées, hors impuretés, à plus de 99,9 %, voire à 100 %, par du pérovskite de lanthane - élément T - manganèse de formule $(La_{1-x}T_x)_{1-y}MnO_{3-\delta}$ avec $0 < x \leq 0,5$ et $-0,1 \leq y \leq 0,24$.

Les dimensions de ces particules peuvent ensuite être réduites, par exemple par broyage sous forme de poudres si leur utilisation l'exige.

Un procédé selon le deuxième mode de réalisation généralisé de l'invention est à présent décrit dans le détail.

A l'étape $a_2$'), une charge de départ est préparée comme exposé à l'étape $a_1$') décrite ci-dessus, l'étape $a_2$') présentant les mêmes caractéristiques préférées que l'étape $a_1$').

A l'étape $b_2$'), la charge de départ est fondue. Tout four de fusion peut être utilisé. La fusion peut être effectuée comme exposé dans partie de la description de l'étape $b_1$'), ou, de préférence dans la partie de la description de l'étape $b_2$) ci-dessus. En particulier, cette dernière partie explique l'intérêt à utiliser un four à induction.

A la fin de l'étape $b_2$'), toute la charge de départ est sous forme liquide.

A l'étape $c_2$'), le liquide en fusion est coulé dans un moule, comme exposé à l'étape $c_2$) décrite ci-dessus. Le liquide en fusion coulé présente une température de préférence supérieure à 1600°C et, de préférence, inférieure à 2200°C, de préférence encore inférieure à 1800 °C lorsque l'élément T est du strontium.

A l'étape $d_2$'), le liquide coulé dans le moule est refroidi jusqu'à obtention d'un bloc au moins en partie solidifié, comme exposé à l'étape $d_2$) décrite ci-dessus, l'étape $d_2$') présentant les mêmes caractéristiques préférées que l'étape $d_2$), notamment en ce qui concerne la mise en contact avec un fluide oxygéné, les vitesses de refroidissement et les moyens de refroidissement.

Avantageusement, de manière surprenante et inexpliquée, la mise en contact du liquide en fusion avec un fluide oxygéné augmente de manière remarquable le taux de pérovskite de LTM au sein du bloc fondu selon l'invention, jusqu'à sensiblement 100%. Aucune étape de recuisson n'est alors nécessaire pour obtenir de telles teneurs.

En outre, les inventeurs ont découvert que la vitesse de refroidissement pendant la solidification n'est pas déterminante pour améliorer la teneur en pérovskite de LTM. Avantageusement, des moyens de refroidissement conventionnels simples peuvent ainsi être mis en oeuvre.

A l'étape $e_2$'), on démoule le bloc comme exposé à l'étape $e_2$) décrite ci-dessus, l'étape $e_2$') présentant les mêmes caractéristiques préférées que l'étape $e_2$), notamment en ce qui concerne l'instant du démoulage et la mise en contact avec un fluide oxygéné.

Dans une étape $f_2$') optionnelle, le bloc démoulé est enfourné dans un four pour subir un traitement thermique de recuisson, comme exposé à l'étape $f_2$) décrite ci-dessus, l'étape $f_2$') présentant les mêmes caractéristiques préférées que l'étape $f_2$), notamment en ce qui concerne les paramètres de recuisson.

Avantageusement, une telle recuisson permet d'augmenter sensiblement le taux de pérovskite de LTM. On obtient ainsi des taux de pérovskite de LTM supérieurs à 99%, de préférence à 99,9%, et même sensiblement égaux à 100%, hors impuretés, et cela même si aucun liquide en fusion n'a pu être mis en contact avec un fluide oxygéné, par exemple parce que le bloc fabriqué était déjà totalement solidifié au moment du démoulage et qu'aucune mise en contact avec un fluide oxygéné n'a été possible au cours du refroidissement dans le moule ou pendant la coulée.

Le bloc peut avantageusement présenter des dimensions quelconques, le procédé de fabrication ne se limitant pas à l'obtention de poudres de pérovskite submicroniques.

Il est donc parfaitement adapté à une fabrication industrielle. De préférence, le bloc présente une épaisseur supérieure à 1 mm, de préférence supérieure à 2 mm, de préférence supérieure à 5 cm, de préférence encore supérieure à 15 cm, l'épaisseur d'un bloc étant sa plus petite dimension.

Pour obtenir une poudre, par exemple pour fabriquer une cathode pour piles à combustible à oxyde solide (SOFC), le bloc, éventuellement recuit, est ensuite concassé et broyé dans les granulométries désirées. Avantageusement, le procédé selon l'invention permet la fabrication de particules de dimensions variées à un coût réduit.

De préférence, le bloc démoulé est d'abord concassé en morceaux de 0 à 5 mm. Puis un traitement thermique de recuisson est effectué sur ces morceaux, qui sont ensuite broyés dans les granulométries désirées.

Les exemples suivants sont fournis à des fins illustratives et ne limitent pas l'invention. Les blocs testés ont été fabriqués de la manière suivante.

Les mêmes matières premières de départ que celles utilisées pour les exemples du premier mode de réalisation généralisé relatif aux particules ont été mélangées intimement dans un mélangeur.

La charge de départ ainsi obtenue a été versée dans un four de fusion à arc de type Héroult (sauf pour l'exemple

$6_2'$). Elle a ensuite été fondue suivant une fusion en arcs longs (tension de 180 Volts, l'énergie appliquée variant, selon les exemples, entre 1150 et 1760 kWh/T) de façon à fondre tout le mélange de façon complète et homogène. Les conditions d'élaboration étaient oxydantes.

Lorsque la fusion a été complète, le liquide en fusion a été coulé, sous air, dans des moules en fonte. La température du liquide en fusion mesurée lors du coulage était comprise entre 1560 et 1700°C.

La vitesse de refroidissement « Vr » a été évaluée comme décrit précédemment (voir tableau 2).

Les analyses chimiques et de détermination de phase de pérovskite de lanthane - calcium - manganèse ont été réalisées sur des échantillons qui présentaient, après broyage, une taille médiane inférieure à 40 $\mu$m.

L'analyse chimique a été effectuée par fluorescence X.

La détermination du taux de pérovskite de lanthane - calcium - manganèse et l'identification des phases de ce pérovskite ont été effectuées comme pour le premier mode de réalisation généralisé (voir tableau 4).

Le tableau 5 résume les résultats obtenus avant tout traitement thermique de recuisson.

- Aucun barbotage de gaz n'a été effectué pendant la fusion.

- L'exemple $6_2'$ concerne un bloc fabriqué suivant un procédé utilisant une fusion par induction selon FR 1 430 962, avec une spire de diamètre 275 mm, une puissance comprise entre 120 et 220 kW et une fréquence délivrée par le générateur apériodique comprise entre 100 et 250 KHz.

- « D999, h888 » désigne un cylindre d'un diamètre D de 999 mm et de hauteur h de 888 mm.

Tableau 5

| Exemple | Tension (Volt) | Energie appliquée (kW/T) | Masse de la charge fondue (kg) | Nature du moule | Vr (°C/s) | Dimensions du bloc coulé (mm) |
|---------|------|------|------|------|------|------|
| $1_2'$ | 180 | 1400 | 50 | Fonte | <0,1 | D200, h150 |
| $2_2'$ | 180 | 1400 | 50 | Fonte | <0,1 | D200, h150 |
| $3_2'$ | 180 | 1760 | 50 | Fonte | <0,1 | D200, h150 |
| $4_2'$ | 180 | 1150 | 40 | Fonte | <0,1 | D200, h150 |
| $5_2'$ | 180 | 1700 | 40 | Fonte | <0,1 | D200, h150 |
| $6_2'$ | - | - | 75 | Spire de l'inducteur | <0,1 | D275, h190 |

Dans le tableau 5' suivant, la teneur en élément Lanthane est exprimée sous la forme de $La_2O_3$, la teneur en élément Calcium est exprimée sous la forme CaO et la teneur en élément Manganèse est exprimée sous la forme MnO.

Tableau 5'

| Exemple | Analyse chimique En % massiques | | | | pérovskite obtenu $(La_{1-x}Ca_x)_{1-y}MnO_{3-\delta}$ | | Taux de pérovskite de LCM (%) |
|---------|------|------|------|------|------|------|------|
| | $La_2O_3$ | CaO | MnO | Impuretés | x | y | |
| $1_2'$ | 61,0 | 6,6 | 32,1 | 0,3 | - | - | 81 |
| $2_2'$ | 58,8 | 5,7 | 35,3 | 0,2 | - | - | 83 |
| $3_2'$ | 56,9 | 6,9 | 35,6 | 0,7 | - | - | 89 |
| $4_2'$ | 64,6 | 3,6 | 31,5 | 0,3 | - | - | 81 |
| $5_2'$ | 55,9 | 7,1 | 36,6 | 0,3 | - | - | 85 |
| $6_2'$ | 59,3 | 5,7 | 34,8 | 0,2 | 0,22 | 0,05 | 99,9 |

Le tableau 5' permet de mettre en évidence l'efficacité du procédé selon l'invention. Il permet également d'observer que lors d'une fusion par induction (exemple $6_2'$) où les surfaces du bloc démoulé étaient plus rapidement en contact avec l'oxygène de l'air (au bout de 20 minutes maximum après le début de la solidification dans cet exemple, alors que le bloc n'était pas encore complètement solidifié), le taux de pérovskite de lanthane - calcium - manganèse dans le produit final est très élevé, atteignant 99,9%, ce qui, avantageusement, peut rendre inutile le recours à un traitement thermique de recuisson.

Les exemples $1_2'$, $2_2'$, $3_2'$ et $5_2'$ ont ensuite subi un traitement thermique de recuisson (tableau 6). Ce traitement thermique de recuisson a été effectué sur des blocs coulés ou sur des blocs concassés en 0-5 mm (exemples $1_2'$ et $2_2'$). Les paramètres des traitements thermiques utilisés sont précisés dans le tableau 6. Ces traitements thermiques ont été réalisés sous air.

Les taux de pérovskite de LTM sont déterminés comme pour les exemples ci-dessus relatifs aux particules de LTM, en l'occurrence relatifs aux particules de lanthane - calcium - manganèse.

Tableau 6

| | Dimensions | Paramètres du traitement thermique de recuisson | | | Analyse chimique obtenue après traitement thermique $(La_{1-x}Ca_x)_{1-y}MnO_{3-\delta}$ | | Taux de pérovskite de LCM après traitement thermique (%) |
|---|---|---|---|---|---|---|---|
| | | Température (°C) | Palier (heures) | atmosphère | x | y | |
| 1 | 0 à 5 mm | 1150 | 5 | Air | 0,24 | -0,09 | 100 |
| 2 | 0 à 5 mm | 1150 | 5 | Air | 0,22 | 0,07 | 100 |
| 3 | D200, h150 | 1150 | 12 | Air | 0,26 | 0,06 | 100 |
| 5 | D200, h150 | 1150 | 12 | Air | 0,27 | 0,09 | 100 |

Le tableau 6 montre que le traitement de recuisson conduit à une augmentation notable du taux de pérovskite de lanthane - calcium - manganèse, jusqu'à sensiblement 100%.

Comme cela apparaît clairement à présent, le procédé selon le deuxième mode de réalisation généralisé de l'invention permet de fabriquer de manière simple et économique, en quantités industrielles, des blocs comportant de grandes quantités pérovskite de lanthane - élément T - manganèse, l'élément T étant un élément choisi dans le groupe constitué par le strontium, le calcium, le magnésium, le baryum, et des mélanges de ces éléments, éventuellement en mélange avec l'yttrium et/ou l'ytterbium et/ou le cérium,.

En particulier, ce procédé permet de fabriquer des blocs constitués, hors impuretés, à plus de 99,9 %, voire à 100 %, par du pérovskite de lanthane - élément T - manganèse de formule $(La_{1-x}T_x)_{1-y}MnO_{3-\delta}$ avec $0 < x \leq 0,5$ et $-0,1 \leq y \leq 0,24$.

Dans le cas où l'élément T est le Calcium, ce procédé permet notamment la fabrication de blocs contenant du pérovskite de lanthane-calcium-manganèse (LCM) dont :

- la teneur massique en « Lanthane exprimé sous la forme $La_2O_3$ » est supérieure à 40,2%, de préférence à 43,3 %, de préférence à 51,8%, de préférence encore à 56,8% et/ou inférieure à 70,8%, de préférence à 69,9% , de préférence à 68,9%, de préférence encore à 63,6%, et/ou

- la teneur massique en « Calcium exprimé sous la forme CaO » est supérieure à 0,44%, de préférence à 3,7% et/ou inférieure à 16,1%, de préférence à 15,6%, de préférence à 10%, de préférence encore à 6,8%, et/ou

- la teneur massique en « Manganèse exprimé sous la forme MnO » est supérieure à 28,7%, de préférence à 29,6, de préférence à 30,6, de préférence encore à 32,6 et/ou inférieure à 46%, de préférence à 41,8%, de préférence à 38,6%, de préférence encore à 36,6%.

Les dimensions des blocs peuvent ensuite être réduites, par exemple par broyage sous forme de poudres si leur utilisation l'exige.

Les produits de pérovskite de LTM fondus sont notamment remarquables en ce que la quantité de phase de type pyrochlore $La_2Zr_2O_7$ générée mesurée suivant le protocole décrit ci-après, est systématiquement inférieure à la quantité de phase de type pyrochlore $La_2Zr_2O_7$ générée dans les mêmes conditions par une poudre de pérovskite de LTM obtenue par un autre procédé que la fusion. Cette propriété apparaît même constituer une signature des produits résultant du procédé selon l'invention.

La méthode utilisée pour mesurer cette propriété est la suivante :

10 grammes de la poudre de pérovskite de LTM à tester, présentant une taille médiane inférieure à 1,5 microns sont intimement mélangés à 10 grammes d'une poudre de zircone stabilisée à 8 mol% d'oxyde d'yttrium. Des pastilles de ce mélange sont ensuite pressées et frittées à haute température, dans un cycle dont le palier est de 24 heures à 1375°C. La taille médiane des poudres de LTM ainsi que les paramètres lors du traitement thermique de frittage ont été déterminées afin de favoriser la formation d'une phase de type pyrochlore $La_2Zr_2O_7$, et ainsi mettre en évidence les différences de comportement des poudres de LTM au contact d'une poudre de zircone stabilisée à 8 mol% d'oxyde d'yttrium.

La quantité de phase de type pyrochlore $La_2Zr_2O_7$ contenue dans l'échantillon fritté, exprimée par rapport à la quantité totale de phase de type pyrochlore $La_2Zr_2O_7$ et de zircone de cet échantillon, est mesurée par diffraction X. La mesure effectuée est donc une mesure comparative, et non quantitative.

Des comparaisons entre différentes poudres de pérovskite de LTM sont facilement réalisables en prenant soin d'utiliser le même protocole, ainsi que la même poudre de zircone stabilisée. De préférence, la totalité des échantillons sont frittés dans le même four, dans un souci de limiter les éventuelles dispersions amenées par la méthode de confection des échantillons à caractériser.

Exemples :

Les essais suivants ont été réalisés dans le but d'illustrer la capacité des produits de pérovskite fondus à générer moins de phase $La_2Zr_2O_7$ lorsqu'ils sont en contact à haute température avec une poudre de zircone stabilisée.

Ils consistent à mélanger intimement une poudre de zircone et une poudre de pérovskite de lanthane dopé - manganèse (LTM), à mettre en forme une pastille, puis à la porter à haute température afin de favoriser la création de la phase $La_2Zr_2O_7$ .La quantité générée de cette phase ramenée à la quantité de zircone de l'échantillon est ensuite déterminée par diffraction X.

Dans le détail, la méthodologie suivante a été réalisée :

Des échantillons comportant les poudres de LTM à comparer ont été préparés de la façon suivante :

10 grammes de poudre de zircone TZ-8Y (zircone stabilisée à 8 mol% d'oxyde d'yttrium et présentant une taille médiane $d_{50}$ de 0,212 $\mu$m (mesurée par sédigraphie), ainsi qu'une surface spécifique de 15,2 $m^2/gr$) commercialisée par la société TOSOH et 10 grammes d'une des poudres de pérovskite de LTM à comparer, présentant une taille médiane entre 0,16 et 1,1 $\mu$m après un éventuel broyage dans un broyeur NETZSCH de type de LME(1) avec des billes en zircone stabilisée à 16,5 mol% d'oxyde de cérium de granulométrie 0,8 - 1 mm, sont mélangées à l'aide d'une spatule en inox dans un bécher en verre, jusqu'à ce que la couleur soit homogène. Le mélange est alors transféré par petites quantités dans un mortier en agate pour être broyé à la main à l'aide d'un pilon en agate, puis l'ensemble de la poudre est de nouveau mélangé dans le bécher en verre avec la spatule en inox.

Des pastilles de 13 mm de diamètre et sensiblement 5 mm d'épaisseur sont ensuite réalisées à l'aide d'une pastilleuse : 2,8 grammes de poudre y sont introduits et pressés sous 50kN avec une presse manuelle Weber pendant 1 min.

Les pastilles sont ensuite déposées dans une gazette en alumine munie d'un couvercle.

L'ensemble est introduit dans un four Naber 1800 commercialisé par la société Nabertherm, puis porté à 1375 °C pendant 24 heures, avec une vitesse de montée en température de 5°C/min et une descente en température de 5°C/min.

Chaque pastille frittée est ensuite passée au lapidaire afin de retirer environ 2mm d'épaisseur et ainsi dégager le coeur du matériau. La pastille est enfin enrobée dans une résine transparente et polie.

Les mesures en diffraction X sont ensuite réalisées à l'aide d'un appareil D5000 de la société BRUKER pourvu d'un tube DX en cuivre. Le diagramme de diffraction X est réalisé avec un pas de 0,02° et une acquisition de 4 secondes par pas. Dans la pratique, ces diagrammes permettent de détecter :

  ◦ une phase de type pyrochlore $La_2Zr_2O_7$, dont le pic principal diffracte à $2\theta \approx 28,7°$ (fiche ICDD 00-017-0450).

  ◦ une phase zircone cubique dont le pic principal diffracte à $2\theta \approx 30,5°$ (fiche ICDD 00-027-0997 ou 01-049-1642).

Alors à l'aide du logiciel EVA (commercialisé par la Société Bruker) et après avoir effectué une soustraction du fond continu (background 0,8), il est possible de mesurer l'aire du pic de la phase de type pyrochlore $La_2Zr_2O_7$ dans le domaine d'angles $28,4° < 2\theta < 29,1°$ et l'aire du pic de la phase zircone cubique dans le domaine d'angles $29,3° < 2\theta < 30,8°$.

Le résultat est donné sous la forme du rapport suivant :

$$\text{aire } (La_2Zr_2O_7) / [\text{aire } (La_2Zr_2O_7) + \text{aire (Zircone cubique)}]$$

Les différentes poudres de pérovskite de LTM comparées sont les suivantes

- poudres comparatives, obtenues par des procédés différents de la fusion, comme la synthèse par frittage en phase solide, la synthèse à partir de précurseurs et pyrolyse (« spray pyrolysis » en anglais) :

  o poudre de pérovskite de (lanthane dopé au strontium)-manganèse commercialisée par la Société NexTech Materials sous le nom LSM20-P ; ci après nommée « exemple comparatif 1 »;

  o poudre de pérovskite de (lanthane dopé au strontium)-manganèse commercialisée par la Société PRAXAIR sous le nom $(La_{0.8}Sr_{0.2})_{0.98}$Mn Oxide, ci après nommée « exemple comparatif 2 »;

  o poudre de pérovskite de (lanthane dopé au strontium)-manganèse synthétisée par frittage en phase solide par la demanderesse, à partir d'un mélange intime de poudres de $La_2O_3$, $SrCO_3$ et de $MnO_2$ fritté dans un cycle comportant un palier de 10 heures à 1450°C, ci après nommée « exemple comparatif 3 ».

- Poudres de produits de pérovskite fondus obtenues par un procédé selon l'invention :

  o Poudre de pérovskite de (lanthane dopé au strontium)-manganèse fondu, précédemment nommé "exemple $1_2$", n'ayant pas subi de traitement de recuisson. (voir tableau 2'),

  o Poudre de pérovskite de (lanthane dopé au strontium)-manganèse fondu précédemment nommé "exemple $1_2$", et ayant subi de traitement de recuisson sous air à 1150°C avec un palier de 5 heures (voir tableau 3),

  o Poudre de pérovskite de (lanthane dopé au strontium)-manganèse fondu précédemment nommé "exemple $1_1$" n'ayant pas subi de traitement de recuisson (voir tableau 1),

  o Poudre de pérovskite de (lanthane dopé au strontium)-manganèse fondu nommé « exemple A » n'ayant pas subi de traitement de recuisson,

  o Poudre de pérovskite de (lanthane dopé au calcium)-manganèse fondu nommé « exemple B » n'ayant pas subi de traitement de recuisson.

Ces pérovskites présentent les compositions chimiques suivantes :

Tableau 7

| Exemple | Composition |
|---|---|
| Comparatif 1 | $(La_{0,8}Sr_{0,2})_{0,99}MnO_{3-\delta}$ |
| Comparatif 2 | $(La_{0,8}Sr_{0,2})_{0,98}MnO_{3-\delta}$ |
| Comparatif 3 | $(La_{0,81}Sr_{0,19})0,99MnO_{3-\delta}$ |
| A | $(La_{0,64}Sr_{0,36}) MnO_{3-\delta}$ |
| B | $(La_{0,79}Ca_{0,21}) MnO_{3-\delta}$ |

Des pastilles ont été réalisées à partir d'un mélange de chacune de ces poudres et de zircone stabilisée comme décrit ci-dessus.

Le tableau 8 résume les mesures des rapports « aire $(La_2Zr_2O_7)$ / [aire $(La_2Zr_2O_7)$ + aire (Zircone cubique)] » déterminés pour chacun des échantillons réalisés :

Tableau 8

| Exemple | rapports aire $(La_2Zr_2O_7)$ / [aire $(La_2Zr_2O_7)$ + aire (Zircone cubique)] |
|---|---|
| Comparatif 1 | 0,049 |
| Comparatif 2 | 0,043 |
| Comparatif 3 | 0,043 |

(suite)

| Exemple | rapports aire $(La_2Zr_2O_7)$ / [aire $(La_2Zr_2O_7)$ + aire (Zircone cubique)] |
|---|---|
| $1_1$ non recuit | 0,017 |
| $1_2$ non recuit | 0 |
| $1_2$ recuit | 0 |
| A | 0 |
| B | 0 |

Le tableau 8 montre clairement que les poudres des produits de pérovskite fondus résultant du procédé selon l'invention présentent un rapport

$$\text{aire } (La_2Zr_2O_7) \text{ / [aire } (La_2Zr_2O_7) + \text{aire (Zircone cubique)]}$$

comparativement beaucoup plus faible que des poudres de produits de pérovskite de l'art antérieur obtenus par un autre procédé que la fusion. Dans les produits résultant du procédé de l'invention, la phase de type pyrochlore $La_2Zr_2O_7$ peut même ne pas pouvoir être mise en évidence.

Avantageusement, les performances de piles à combustible à oxyde solide utilisant ces produits s'en trouvent améliorées.

Par ailleurs, le tableau 8 (exemple $1_2$) montre qu'une recuisson ne modifie pas le comportement avantageux d'un produit résultant du procédé selon l'invention. Après recuisson, un produit résultant du procédé selon l'invention reste donc différent des exemples comparatifs.

Les produits de pérovskite de LTM peuvent également générer des phases gênantes de type $T_aZr_bO_c$, a, b et c étant des nombres entiers, lorsqu'ils sont en contact avec de la zircone comme décrit ci-dessus. La quantité de chaque phase de type $T_aZr_bO_c$, exprimée par rapport à la quantité totale de cette phase de type $T_aZr_bO_c$ et de la zircone cubique, est systématiquement inférieure avec les produits fondus selon l'invention qu'avec les produits non fondus selon la technique antérieure, comme le montrent les essais ci-dessous.

La méthode utilisée pour mesurer la quantité d'une phase de type $T_aZr_bO_c$ est semblable à celle utilisée pour mesurer la quantité de phase de type pyrochlore $La_2Zr_2O_7$. décrite précédemment

Par exemple, lorsque l'élément T du pérovskite de LTM est le strontium (Sr), la phase à mettre en évidence est $SrZrO_3$. Les diagrammes de diffraction X permettent de détecter :

  o une phase de type $SrZrO_3$, dont le pic principal diffracte à $2\theta \approx 30,8°$ ;

  o une phase de zircone cubique dont le pic principal diffracte à $2\theta \approx 30,5°$ (fiche ICDD 00-027-0997 ou 01-049-1642).

Alors à l'aide du logiciel EVA (commercialisé par la Société Bruker) et après avoir effectué une soustraction du fond continu (background 0,8), il est possible de mesurer l'aire du pic de la phase $SrZrO_3$ dans le domaine d'angles $30,5° < 2\theta < 31,2°$ et l'aire du pic de la phase zircone cubique dans le domaine d'angles $29,3° < 2\theta < 30,8°$.

Le résultat est donné sous la forme du rapport suivant :

$$\text{aire } (SrZrO_3) \text{ / [aire } (SrZrO_3) + \text{aire (Zircone cubique)]}$$

Les différentes poudres de pérovskite de LSM comparées sont les suivantes :

  o une poudre comparative de pérovskite de (lanthane dopé au strontium)-manganèse, synthétisée par frittage en phase solide par la demanderesse, à partir d'un mélange intime de poudres de $La_2O_3$, $SrCO_3$ et de $MnO_2$ fritté dans un cycle comportant un palier de 10 heures à 1450°C, ci après nommée « exemple comparatif 4 ».
  o une poudre de pérovskite de (lanthane dopé au strontium)-manganèse fondu résultant du procédé selon l'invention nommé « exemple C » n'ayant pas subi de traitement de recuisson,

Ces pérovskites présentent les compositions chimiques suivantes :

Tableau 9

| Exemple | Composition |
|---|---|
| Comparatif 4 | $(La_{0,63}Sr_{0,37})MnO_{3-\delta}$ |
| C | $(La_{0,63}Sr_{0,37})MnO_{3-\delta}$ |

Des pastilles ont été réalisées à partir d'un mélange de chacune de ces poudres et de zircone stabilisée comme décrit ci-dessus.

Le tableau 10 résume les mesures des rapports « aire $(SrZrO_3)$ / [aire $(SrZrO_3)$ + aire (Zircone cubique)] » déterminés pour chacun des échantillons réalisés :

Tableau 10

| Exemple | rapports aire $(SrZrO_3)$ / [aire $(SrZrO_3)$ + aire (Zircone cubique)] |
|---|---|
| Comparatif 4 | 0,068 |
| C | 0 |

Le tableau 10 montre clairement que les poudres des produits de pérovskite de LSM fondus résultant du procédé selon l'invention présentent un rapport

$$aire\ (SrZrO_3)\ /\ [aire\ (SrZrO_3)\ +\ aire\ (Zircone\ cubique)]$$

comparativement beaucoup plus faible que des poudres de produits de pérovskite obtenus par un autre procédé que la fusion. Dans les produits résultant du procédé de l'invention, la phase $SrZrO_3$ peut même ne pas pouvoir être mise en évidence.

Avantageusement, les performances de piles à combustible à oxyde solide utilisant ces produits s'en trouvent améliorées.

Bien entendu, la présente invention n'est pas limitée aux modes de réalisation décrits fournis à titre d'exemples illustratifs et non limitatifs.

## Revendications

1. Procédé de fabrication d'un produit fondu comportant du pérovskite de LTM, L désignant le lanthane (La), T étant un élément choisi dans le groupe formé par le strontium, le calcium, le magnésium, le baryum, et des mélanges de ces éléments, éventuellement en mélange avec l'yttrium et/ou l'ytterbium et/ou le cérium, et M désignant le manganèse (Mn), ce procédé comportant les étapes suivantes :

   a') mélange de matières premières apportant du lanthane, de l'élément T et du manganèse, de manière à former une charge de départ, les composés apportant les éléments L, T et M représentant ensemble plus de 90 %, en pourcentages massiques, des constituants de la charge de départ,
   b') fusion de la charge de départ au moyen d'un four à arc ou par induction jusqu'à obtention d'un liquide en fusion,
   c') refroidissement jusqu'à solidification complète dudit liquide en fusion, de manière à obtenir un matériau fondu sous la forme d'un bloc d'une épaisseur supérieure à 1 mm ou d'une particule.

2. Procédé selon la revendication précédente, dans lequel la charge de départ comporte des matières premières apportant un élément choisi parmi l'yttrium, l'ytterbium, le cérium et les mélanges de ces éléments.

3. Procédé selon l'une quelconque des deux revendications immédiatement précédentes, dans lequel on recuit le matériau fondu à une température de palier comprise entre 1050 et 1400 °C pendant un temps de palier en température d'au moins 30 minutes, le palier commençant, dans le cas où le matériau fondu est sous la forme d'un bloc, lorsque la totalité du matériau fondu a atteint la température de palier, la recuisson étant effectuée sous une atmosphère contenant au moins 20% en volume d'oxygène.

**4.** Procédé selon l'une quelconque des trois revendications immédiatement précédentes, dans lequel l'étape c') comporte les étapes suivantes :

$c_1$') dispersion du liquide en fusion sous forme de gouttelettes liquides,

$d_1$') solidification de ces gouttelettes liquides par contact avec un fluide oxygéné, de manière à obtenir des particules fondues procédé dans lequel, à l'étape $c_1$'), on met en contact ledit liquide en fusion avec un fluide oxygéné comportant au moins 20 % en volume d'oxygène, et on maintient un contact entre les gouttelettes et le fluide oxygéné jusqu'à la solidification complète desdites gouttelettes ou

dans lequel l'étape c') comporte les étapes suivantes :

$c_2$') coulage du liquide en fusion dans un moule ;

$d_2$') solidification par refroidissement du liquide coulé dans le moule jusqu'à obtention d'un bloc au moins en partie solidifié ;

$e_2$') démoulage du bloc, avant solidification complète du bloc,

et dans lequel à l'étape $c_2$') et/ou à l'étape $d_2$') et/ou après l'étape $e_2$'), on met en contact, directement ou indirectement, dudit liquide en fusion en cours de solidification avec un fluide oxygéné, et on maintient ledit contact jusqu'à la solidification complète du bloc, la vitesse de refroidissement du liquide en fusion pendant la solidification étant toujours inférieure à 1000 K/s.

**5.** Procédé selon l'une quelconque des revendications précédentes, dans lequel les quantités de lanthane, d'élément T et de manganèse dans la charge de départ sont déterminées de manière que la composition du matériau fondu obtenu en fin d'étape c') soit telle ledit pérovskite présente des teneurs molaires $l_p$, $t_p$ et $m_p$ en lanthane, en élément T et en manganèse, respectivement, telles que, en posant $x = t_p / (l_p + t_p)$ et $y = 1 - (l_p + t_p)/m_p$,

o $x > 0$ et/ou $x \leq 0,5$, et
o $y \geq -0,1$ et/ou $y \leq 0,24$.

**6.** Procédé selon la revendication immédiatement précédente, dans lequel

o $x > 0,02$ et/ou $x < 0,35$ ; et/ou
o $-0,05 \leq y$ et/ou $y \leq 0,1$.

**7.** Procédé selon la revendication immédiatement précédente, dans lequel

o $0,15 < x$ et/ou $x < 0,25$ ; et/ou
o $0 \leq y$.

**8.** Procédé selon l'une quelconque des revendications précédentes, dans lequel le taux de pérovskite de LTM, hors impuretés, dans ledit matériau est supérieur à 99 %.

**9.** Procédé selon la revendication précédente, ledit pérovskite étant un pérovskite de lanthane - strontium - manganèse de formule $(La_{1-x}Sr_x)_{1-y}MnO_3$, avec $0 < x \leq 0,5$ et $-0,05 \leq y \leq 0,24$, x et y étant des proportions atomiques, le taux de pérovskite de LTM, hors impuretés, dans ledit matériau étant supérieur à 99,9 %.

**10.** Procédé selon la revendication précédente, dans lequel la formule dudit pérovskite de lanthane - strontium - manganèse est telle que :
$(x < 0,5)$ et $(0 \leq y$ et/ou $y \leq 0,1)$.

**11.** Procédé selon la revendication précédente dans lequel la formule dudit pérovskite de lanthane - strontium - manganèse est telle que :
$(0,15 < x$ et $x < 0,35)$.

**12.** Procédé selon la revendication précédente, dans lequel la formule dudit pérovskite de lanthane - strontium - manganèse est telle que :

$$x < 0{,}25.$$

13. Procédé selon la revendication précédente, ladite composition étant telle que, en pourcentages massiques et pour un total de 100% :

36% < Lanthane exprimé sous la forme La$_2$O$_3$ < 70,7%
0% < Strontium exprimé sous la forme SrO < 25,8%
29,3% < Manganèse exprimé sous la forme MnO < 41,2%
Impuretés < 0,7%,
le strontium étant un dopant du lanthane.

14. Procédé selon la revendication précédente, ladite composition étant telle que, en pourcentages massiques et pour un total de 100% :

53,9% < Lanthane exprimé sous la forme La$_2$O$_3$ < 61,6%
6,7% < Strontium exprimé sous la forme SrO < 11,8%
31,5% < Manganèse exprimé sous la forme MnO < 34,7%
Impuretés < 0,7%.

15. Procédé selon l'une quelconque des revendications 1 à 2 et 4 à 14, ne comportant pas de traitement thermique de recuisson après refroidissement et/ou de broyage.

16. Procédé selon l'une quelconque des revendications précédentes, T désignant le magnésium éventuellement en mélange avec un ou plusieurs des éléments choisis parmi le strontium, le calcium, le baryum.

17. Procédé comportant la fabrication d'un produit fondu par un procédé selon l'une quelconque des revendications précédentes et l'utilisation dudit produit fondu dans la fabrication de cathodes pour piles à combustible à oxyde solide (SOFC).

**Patentansprüche**

1. Verfahren zur Herstellung eines geschmolzenen Produkts, umfassend LTM-Perowskit, wobei L Lanthan (La) bezeichnet, wobei T ein Element ist, ausgewählt aus der Gruppe bestehend aus Strontium, Calcium, Magnesium, Barium und Mischungen dieser Elemente, gegebenenfalls in Mischung mit Yttrium und/oder Ytterbium und/oder Cer, und wobei M Mangan (Mn) bezeichnet, wobei dieses Verfahren die folgenden Schritte aufweist:

a') Mischen von Rohstoffen, die Lanthan, das Element T und Mangan bereitstellen, derart, um ein Einsatzmaterial zu bilden, wobei die Verbindungen, die die Elemente L, T und M bereitstellen, zusammen mehr als 90 Massenprozent der Bestandteile des Einsatzmaterials darstellen,
b') Schmelzen des Einsatzmaterials mittels eines Lichtbogenofens oder durch Induktion bis zum Erhalten einer Schmelzflüssigkeit,
c') Abkühlen bis zum vollständigen Verfestigen der Schmelzflüssigkeit, derart, um ein geschmolzenes Material in Form eines Blocks mit einer Dicke von mehr als 1 mm oder eines Teilchens zu erhalten.

2. Verfahren nach dem vorhergehenden Anspruch, wobei das Einsatzmaterial Rohstoffe umfasst, die ein Element bereitstellen, das aus Yttrium, Ytterbium, Cer und den Mischungen dieser Elemente ausgewählt ist.

3. Verfahren nach einem der zwei unmittelbar vorhergehenden Ansprüche, wobei das geschmolzene Material bei einer Stufentemperatur zwischen 1.050 und 1.400 °C für eine Verweilzeit bei der Temperatur von mindestens 30 Minuten getempert wird, wobei die Stufe in dem Fall, in dem das geschmolzene Material in Form eines Blocks vorliegt, beginnt, wenn das gesamte geschmolzene Material die Stufentemperatur erreicht hat, wobei das Tempern unter einer Atmosphäre durchgeführt wird, die mindestens 20 Vol.-% Sauerstoff enthält.

4. Verfahren nach einem der drei unmittelbar vorhergehenden Ansprüche, wobei der Schritt c') die folgenden Schritte aufweist:

$c_1'$) Dispergieren der Schmelzflüssigkeit in Form von flüssigen Tröpfchen,

$d_1'$) Verfestigen dieser flüssigen Tröpfchen durch Kontakt mit einer mit Sauerstoff angereicherten Flüssigkeit, derart, um geschmolzene Teilchen zu erhalten, Verfahren, wobei in Schritt $c_1'$) die Schmelzflüssigkeit mit einer mit Sauerstoff angereicherten Flüssigkeit in Kontakt gebracht wird, die mindestens 20 Vol.-% Sauerstoff umfasst, und ein Kontakt zwischen den Tröpfchen und der mit Sauerstoff angereicherten Flüssigkeit bis zur vollständigen Verfestigung der Tröpfchen aufrecht gehalten wird oder

wobei der Schritt c') die folgenden Schritte aufweist:

$c_2'$) Gießen der Schmelzflüssigkeit in eine Form,

$d_2'$) Verfestigen durch Abkühlen der Schmelzflüssigkeit in der Form bis zum Erhalten eines Blocks, der mindestens teilweise verfestigt ist,

$e_2'$) Ausformen des Blocks vor der vollständigen Verfestigung des Blocks,

und wobei in dem Schritt $c_2'$) und/oder dem Schritt $d_2'$) und/oder nach dem Schritt $e_2'$) sich verfestigende Schmelzflüssigkeit direkt oder indirekt mit einer mit Sauerstoff angereicherten Flüssigkeit in Kontakt gebracht wird und der Kontakt bis zur vollständigen Verfestigung des Blocks aufrecht gehalten wird, wobei die Abkühlgeschwindigkeit der Schmelzflüssigkeit während des Verfestigens stets niedriger als 1.000 K/s ist.

5. Verfahren nach einem der vorhergehenden Ansprüche, wobei die Mengen an Lanthan, des Elements T und an Mangan in dem Einsatzmaterial derart bestimmt werden, dass die Zusammensetzung des geschmolzenen Materials, das am Ende des Schrittes c') erhalten wird, derart ist, dass Perowskit Molgehalte $l_p$, $t_p$ und $m_p$ an Lanthan, an Element T und an Mangan aufweist, die jeweils derart sind, dass, wenn $x=t_p/(l_p+t_p)$ und $y=l-(l_p+t_p)/m_p$,

○ $x > 0$ und/oder $x \leq 0,5$ und

○ $y \geq -0,1$ und/oder $y \leq 0,24$.

6. Verfahren nach dem unmittelbar vorhergehenden Anspruch, wobei

○ $x > 0,02$ und/oder $x < 0,35$ und/oder

○ $-0,05 \leq y$ und/oder $y \leq 0,1$.

7. Verfahren nach dem unmittelbar vorhergehenden Anspruch, wobei

○ $0,15 < x$ und/oder $x < 0,25$ und/oder

○ $0 \leq y$.

8. Verfahren nach einem der vorhergehenden Ansprüche, wobei der Anteil an LTM-Perowskit, ausgenommen Verunreinigungen, in dem Material größer als 99 % ist.

9. Verfahren nach dem vorhergehenden Anspruch, wobei Perowskit ein Lanthan-Strontium-Mangan-Perowskit der Formel $(La_{1-x} Sr_x)_{1-y}MnO_3$ ist, mit $0 < x \leq 0,5$ und $-0,05 \leq y \leq 0,24$, wobei x und y Atomverhältnisse sind, wobei der Anteil an LTM-Perowskit, ausgenommen Verunreinigungen, in dem Material größer als 99,9 % ist.

10. Verfahren nach dem vorhergehenden Anspruch, wobei die Formel des Lanthan-Strontium-Mangan-Perowskits derart ist, dass:

$(x < 0,5)$ und $(0 \leq y$ und/oder $y \leq 0,1)$.

11. Verfahren nach dem vorhergehenden Anspruch, wobei die Formel des Lanthan-Strontium-Mangan-Perowskits derart ist, dass:

$(0,15 < x$ und $x < 0,35)$.

12. Verfahren nach dem vorhergehenden Anspruch, wobei die Formel des Lanthan-Strontium-Mangan-Perowskits derart ist, dass:

$$x < 0,25.$$

**13.** Verfahren nach dem vorhergehenden Anspruch, wobei die Zusammensetzung derart ist, dass in Massenprozent und für insgesamt 100 %:

36 % < Lanthan, ausgedrückt als $La_2O_3$ < 70,7 %
0 % < Strontium, ausgedrückt als SrO < 25,8 %
29,3 % < Mangan, ausgedrückt als MnO < 41,2 %
Verunreinigungen < 0,7 %,

wobei Strontium ein Dotierungsmittel von Lanthan ist.

**14.** Verfahren nach dem vorhergehenden Anspruch, wobei die Zusammensetzung derart ist, dass in Massenprozent und für insgesamt 100 %:

53,9 % < Lanthan, ausgedrückt als $La_2O_3$ < 61,6 %
6,7 % < Strontium, ausgedrückt als SrO < 11,8 % 31,5 % < Mangan, ausgedrückt als MnO < 34,7 %
Verunreinigungen < 0,7 %.

**15.** Verfahren nach einem der Ansprüche 1 bis 2 und 4 bis 14, das keine Wärmebehandlung des Temperns nach dem Abkühlen und/oder kein Mahlen aufweist.

**16.** Verfahren nach einem der vorhergehenden Ansprüche, wobei T Magnesium gegebenenfalls in Mischung mit einem oder mehreren der Elemente, ausgewählt aus Strontium, Calcium und Barium bezeichnet.

**17.** Verfahren, umfassend das Herstellen eines geschmolzenen Produkts durch ein Verfahren nach einem der vorhergehenden Ansprüche und Verwenden des geschmolzenen Produkts bei der Herstellung von Kathoden für Festoxidbrennstoffzellen (SOFC).

**Claims**

**1.** A method of fabricating a fused product comprising LTM perovskite, L designating lanthanum (La), T being an element selected from strontium, calcium, magnesium, barium, and mixtures of these elements, possibly mixed with yttrium and/or ytterbium and/or cerium, and M designating manganese (Mn), said method comprising the following steps:

a') mixing raw materials providing lanthanum, the element T, and manganese, so as to form a starting charge, the compounds providing the elements L, T, and M together representing more than 90% by weight of the ingredients of the starting charge;
b') fusing the starting charge with an arc furnace or by induction to obtain a molten liquid;
c') cooling said molten liquid until it has solidified completely, so as to obtain a fused product presenting the shape of a block having a thickness greater than 1 mm or the shape of a particle.

**2.** A method according to the preceding claim, in which the starting charge comprises raw materials providing an element chosen among yttrium, ytterbium, cerium, and mixtures of these elements.

**3.** A method according to any one of the two immediately preceding claims, in which annealing is performed on said fused product with a soak temperature lying in the range 1050°C to 1400°C for a soak duration at that temperature of at least 30 minutes, the soak beginning, when the fused product is in the form of a block, once all of the fused product has reached the soak temperature, the annealing being performed under an atmosphere containing at least 20% by volume of oxygen.

**4.** A method according to any one of the three immediately preceding claims, in which step c') comprises the following steps:

$c_1'$) dispersing the molten liquid in the form of liquid droplets; and
$d_1'$) solidifying the liquid droplets by contact with an oxygenated fluid, so as to obtain fused particles,

method in which, in step $c_1'$), said molten liquid is put into contact with an oxygenated fluid containing at least 20% by volume of oxygen, and in which contact is maintained between the droplets and the oxygenated fluid until said droplets have solidified completely or
in which step c') comprises the following steps:

> c$_2$') casting the molten liquid into a mold;
> d$_2$') solidifying the liquid cast into the mold by cooling to obtain a block that is solidified at least in part; and
> e$_2$') unmolding the block, before complete solidification of the block,

and in which in step c$_2$') and/or in step d$_2$') and/or after step e$_2$'), said molten liquid that is solidifying is put directly or indirectly into contact with an oxygenated fluid, said contact being maintained until the block has solidified completely, the rate of cooling of the molten liquid during solidification always being less than 1000 K/s.

5. A method according to any one of the preceding claims, in which the quantities of lanthanum, element T and manganese in the starting charge are determined so that the composition of the fused product obtained at the end of step c') is such that said perovskite presents molar proportions l$_p$, t$_p$, and m$_p$ of lanthanum, of element T, and of manganese respectively such that, writing:

$$x = t_p/(l_p + t_p) \text{ and } y = 1 - (l_p + t_p)/m_p$$

and

$$x = t_p/(l_p + t_p) \text{ and } y = 1 - (l_p + t_p)/m_p$$

> • x > 0 and/or x ≤ 0.5; and
> • y ≥ -0.1 and/or y ≤ 0.24.

6. A method according to the preceding claim, in which:

> • x > 0.02 and/or x < 0.35; and/or
> • -0.05 ≤ y and/or y ≤ 0.1.

7. A method according to the preceding claim, in which:

> • 0.15 < x and/or x < 0.25; and/or
> • 0 ≤ y.

8. A method according to the preceding claim, in which the LTM perovskite percentage, ignoring impurities, is greater than 99% in said product.

9. A method according to the preceding claim, said perovskite being a lanthanum-strontium-manganese perovskite of formula (La$_{1-x}$Sr$_x$)$_{1-y}$MnO$_3$ with 0 < x ≤ 0.5, and -0.05 ≤ y ≤ 0.24, x and y being atom proportions, the LTM perovskite percentage, ignoring impurities, being greater than 99.9% in said product.

10. A method according to the preceding claim, in which the formula of said lanthanum-strontium-manganese perovskite is such that:
(x < 0.5) and (0 ≤ y and/or y ≤ 0.1).

11. A method according to the preceding claim, in which the formula of said lanthanum-strontium-manganese perovskite is such that:
(0.15 < x and/or x < 0.35).

12. A method according to the preceding claim, in which the formula of said lanthanum-strontium-manganese perovskite is such that:

$$x < 0.25.$$

13. A method according to the preceding claim, said fused product presenting the following chemical composition in percentages by weight and for a total of 100%:

   36% < lanthanum expressed in the form $La_2O_3$ < 70.7%;
   0% < strontium expressed in the form SrO < 25.8%;
   29.3% < manganese expressed in the form of MnO < 41.2%; and impurities < 0.7%,

   the strontium being a dopant of the lanthanum.

14. A method according to the preceding claim, said fused product presenting the following chemical composition in percentages by weight and for a total of 100%:

   53.9% < lanthanum expressed in the form $La_2O_3$ < 61.6%;
   6.7% < strontium expressed in the form SrO < 11.8%;
   31.5% < manganese expressed in the form of MnO < 34.7%; and
   impurities < 0.7%.

15. A method according to any one of claims 1 to 2 and 4 to 14, that does not comprise an annealing heat treatment after cooling and/or any grinding.

16. A method according to any one of the preceding claims, T designating magnesium, possibly mixed with one or more of the elements chosen from strontium, calcium, barium.

17. A method comprising the fabrication of a fused product according to any one of the preceding claims and the use of said fused product in the fabrication of cathodes for solid oxide fuel cells (SOFC).

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5453330 A
- EP 0732430 A
- FR 1208577

- FR 1430962
- US 3993119 A

**Littérature non-brevet citée dans la description**

- Nanomaterials : new elaboration processes using solar furnaces. *Materials Science Forum,* 1998, vol. 269-272, 297-302

- **ROBERT J. BELL ; GRAEME J. MILLAR ; JOHN DRENNAN.** Influence of synthetis route on the catalytic properties of La1-xSrxMnO. *Solid State Ionics,* 2000, vol. 131, 211-220